# EUROPEAN PATENT APPLICATION

(11) **EP 4 350 423 A1**
(43) Date of publication of application: **10.04.2024**
(21) Application number: 22811074.8
(22) Date of filing: 20.04.2022
(51) Int. Cl.: G02B 30/56

(54) **SPATIAL FLOATING IMAGE DISPLAY DEVICE AND LIGHT SOURCE DEVICE**

(30) Priority: 24.05.2021 JP 2021086984; 24.05.2021 JP 2021086987
(71) Applicant: Maxell, Ltd., Kyoto 618-8525 (JP)
(72) Inventor: HIRATA, Koji, Otokuni-gun, Kyoto 618-8525 (JP); FUJITA, Koji, Otokuni-gun, Kyoto 618-8525 (JP); SUGIYAMA, Toshinori, Otokuni-gun, Kyoto 618-8525 (JP); YATSU, Masahiko, Otokuni-gun, Kyoto 618-8525 (JP)
(74) Representative: Mewburn Ellis LLP
(86) International application number: PCT/JP2022/018282
(87) International publication number: WO 2022/249800

(57) **Abstract**

A compact air floating video display apparatus having a large floating amount is provided. The air floating video display apparatus according to the present invention contributed to "the third goal: Good Health and Well-being (for all people)", "the ninth goal: Industry, Innovation and Infrastructure" and "the eleventh goal: Sustainable Cities and Communities" of the sustainable development goals (SDGs) advocated by the United Nations. The air floating video display apparatus includes: a liquid crystal display panel 11 serving as a video source; a light source 13 supplying light of a specific polarization directionality to the video source; a retroreflection optical member (2A, 2B) provided with a waveplate 21; a polarization splitter (101, 102); and an optical element 2150 arranged near an opening portion (transparent member 100), video light of one polarization wave emitted firm the video source is transmitted through or reflected by the polarization splitter, and is converted in terms of light polarization by the retroreflection optical member 2, and is transmitted through the optical element, 2150, based on the video light so that an air floating video 220 as an enlarged image is displayed

## Description

### TECHNICAL FIELD

The present invention relates to a technique for an air floating video display apparatus for displaying an air floating video having high visual recognition even under bright usage environment, and relates to a technique for an air floating video display apparatus using an optical system enabling a plurality of viewing persons to simultaneously view an image of the air floating video as an actual image.

### BACKGROUND ART

Japanese Patent Document No. 6632747 (Patent Document 1) has been proposed as a technique for downsizing an air floating video display apparatus aerially displaying an image and increasing a protrusion distance of an air video.

### RELATED ART DOCUMENT

### PATENT DOCUMENT

Patent Document 1: Japanese Patent Document No. 6632747

### SUMMARY OF THE INVENTION

### PROBLEMS 10 BE SOLVED BY THE INVENTION

A video display apparatus of this type has been desired to increase a protrusion amount (in other words, floating amount) of the air floating video emitted from the air floating video display apparatus to expand a visual recognition range of the air image. Meanwhile, in order to increase a size of the air floating video, it is necessary to increase a size of a display image on an image display (display). In this case, the related art undesirably increases the size of the air floating video display apparatus (set).

An objective of the present invention is to provide an air floating video display technique capable of more favorably displaying an air floating video.

### MEANS FOR SOLVING THE PROBLEMS

In order to solve the above-described problems, for example, configurations recited in claims are employed. Although the present application includes a plurality of means for solving the above-described problems, one example is exemplified as follows. An air floating video display apparatus forming an air floating video includes: an opening portion transmitting video light of a specific polarization wave forming the air floating video therethrough; a display panel serving as a video source; a light source supplying light of specific polarization directionality to the video source; a retroreflection optical member having a retroreflection surface provided with a waveplate; a polarization splitter in a space connecting an imaging position of the air floating video and the retroreflection optical member, and an optical element arranged at a position near the opening portion as a position at which video luminous flux emitted for each pixel of the video source is transmitted, video light of one polarization wave emitted from the video source is transmitted through or reflected by the polarization splitter, and is transmitted through the optical element, based on the video light having been transmitted through or reflected on the polarization splitter, so that the air floating video that is an actual image is displayed outside the opening portion.

### EFFECTS OF THE INVENTION

According to the present invention, an air floating video display technique capable of more favorably displaying an air floating video can be provided. A problem, a configuration, and an effect other than those described above will be apparent from explanation for the following embodiments.

### BRIEF DESCRIPTIONS OF THE DRAWINGS

FIG. 1 is a diagram showing an example of a configuration of a principal portion and a configuration of a retroreflection optical portion for explaining principle of an air floating video display apparatus according to an embodiment of the present invention.
FIG. 2 is an explanatory diagram showing a retroreflection optical member as an issue of the air floating video display apparatus.
FIG. 3 is a characteristic diagram showing relation between surface roughness of the retroreflection optical member and a blur amount of a retroreflection image.
FIG. 4 is a diagram showing principle of a ghost-image reducing means of the air floating video display apparatus of one example.
FIG. 5 is a diagram showing principle according to a first embodiment in a depth reducing means of the air floating video display apparatus.
FIG. 6 is a diagram showing principle according to a second embodiment in a depth reducing means of the air floating video display apparatus.
FIG. 7 is a diagram showing principle according to a third embodiment in a set volume reducing means of the air floating video display apparatus.
FIG. 8 is a diagram showing principle according to a fourth embodiment in a set-volume reducing means of the air floating video display apparatus.
FIG. 9 is a diagram showing principle according to a fifth embodiment in a set-volume reducing means of the air floating video display apparatus.
FIG. 10 is a diagram showing principle according to a sixth embodiment in a set volume reducing means of the air floating video display apparatus.
FIG. 11 is a diagram showing principle according to a seventh embodiment in a set-volume reducing means of the air floating video display apparatus.
FIG. 12 is a diagram showing principle of an optical member of the air floating video display apparatus.
FIG. 13 is a diagram showing principle according to a first embodiment in a set-volume reducing means of the air floating video display apparatus.
FIG. 14 is a diagram showing principle according to a second embodiment in a set-volume reducing means of the air floating video display apparatus.
FIG. 15 is a diagram showing principle according to a third embodiment in a set-volume reducing means of the air floating video display apparatus.
FIG. 16 is a top view showing a first structure of an optical component of the air floating video display apparatus.
FIG. 17 is a diagram showing an image field shape of a first air floating video provided by the air floating video display apparatus.
FIG. 18 is a top view showing a second structure of an optical component of the air floating video display apparatus.
FIG. 19 is a diagram showing an image field shape of a second air floating video provided by the air floating video display apparatus.
FIG. 20 is an explanatory diagram showing principle of enlarging the air floating video of the air floating video display apparatus.
FIG. 21 is a characteristic diagram showing angle characteristics of light output from a video display apparatus.
FIG. 22 is a diagram showing one example of a specific configuration of a light source.
FIG. 23 is a cross-sectional diagram showing one example of a specific configuration of a light source.
FIG. 24 is a cross-sectional diagram showing one example of a specific configuration of a light source.
FIG. 25 is a cross-sectional diagram showing one example of a specific configuration of a light source.
FIG. 26 is a cross-sectional diagram showing one example of a specific configuration of a light source.
FIG. 27 is a cross-sectional diagram showing one example of a specific configuration of a light source.
FIG. 28 is a cross-sectional diagram showing one example of a specific configuration of a light source.
FIG. 29 is an explanatory diagram showing a divergence property of a display apparatus.
FIG. 30 is an explanatory diagram showing a divergence property of a display apparatus.
FIG. 31 is a cross-sectional diagram showing one example of a specific configuration of a light source.
FIG. 32 is a diagram showing one example of a specific configuration of a light source.
FIG. 33 is a diagram showing one example of a usage mode of the air floating video display apparatus according to one example.
FIG. 34 is a diagram showing a second embodiment of the configuration of the principal portion in a case in which the air floating video display apparatus is installed in a motor vehicle.
FIG. 35 is a property diagram showing a reflection property of glass with respect to an incident angle of light ray depending on difference in a polarization component
FIG. 36 is a property diagram showing illuminance of spectral radiation of sunlight

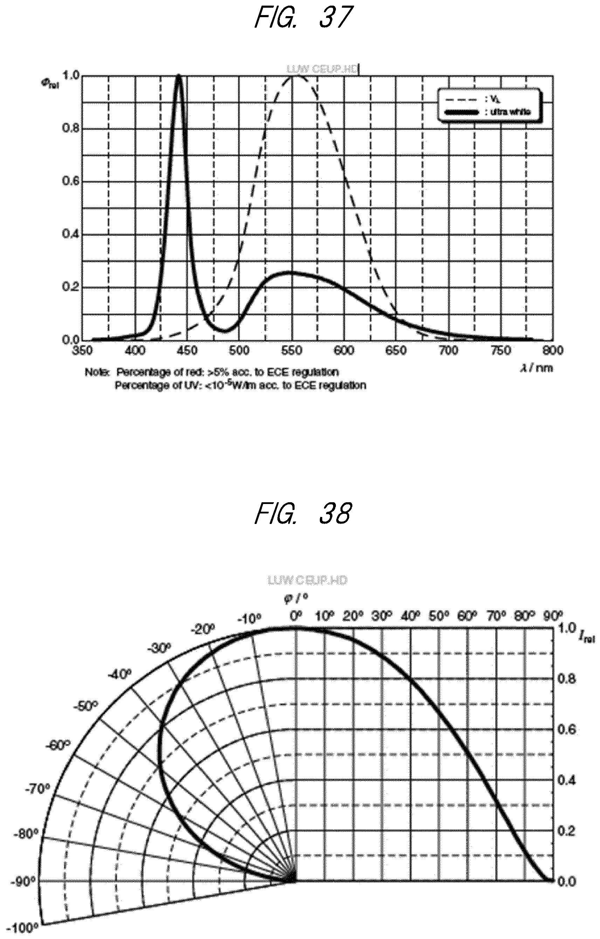

FIG. 37 is a property diagram showing a relative value of luminance of spectral radiation of a high-luminance white LED.
FIG. 38 is a property diagram showing a radiation property of the high- luminance white LED.

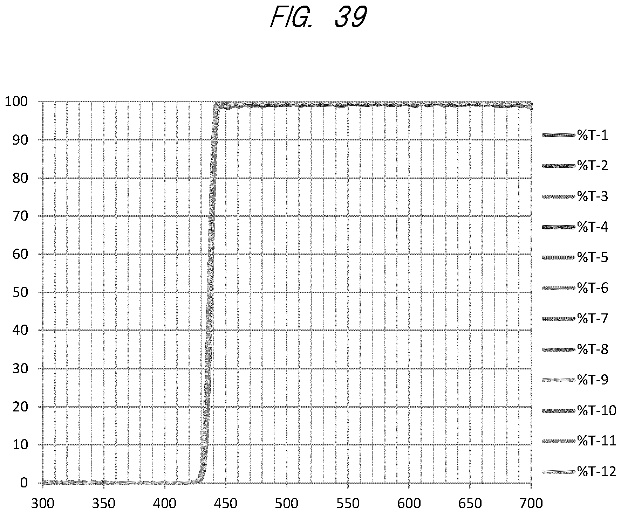

FIG. 39 is a property diagram showing a filter property for selecting blue-color light of the light source.

### DETAILED DESCRIPTION OF PREFERRED EMBODIMENTS

### <Related-Art Air Floating Video Display Apparatus>

In a related-art air floating video display apparatus, an organic EL panel or a liquid crystal display panel having a property of diverging video light is used as a high-resolution color video display source, and is made in combination with a retroreflection optical member. This air floating video display apparatus provides a planar air floating video having the same size as that of the color video display source.

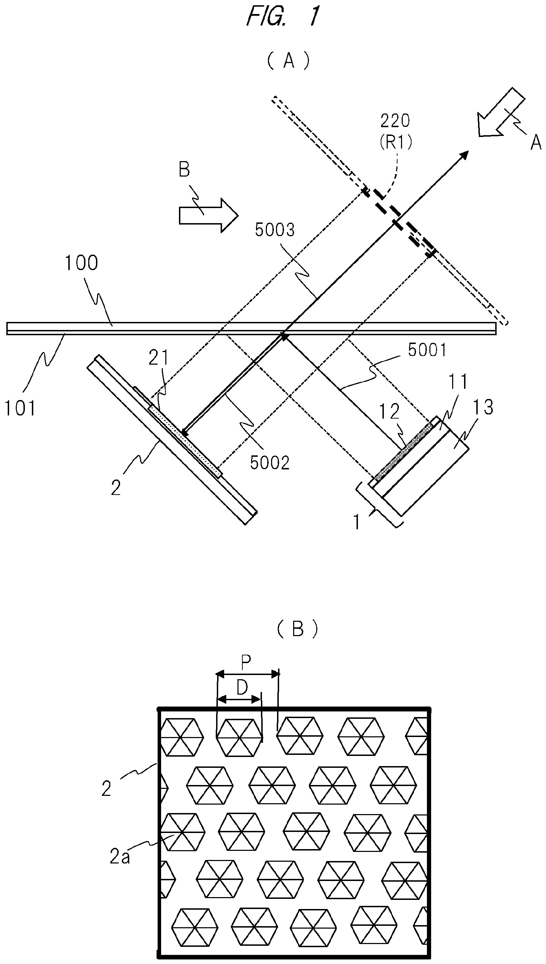

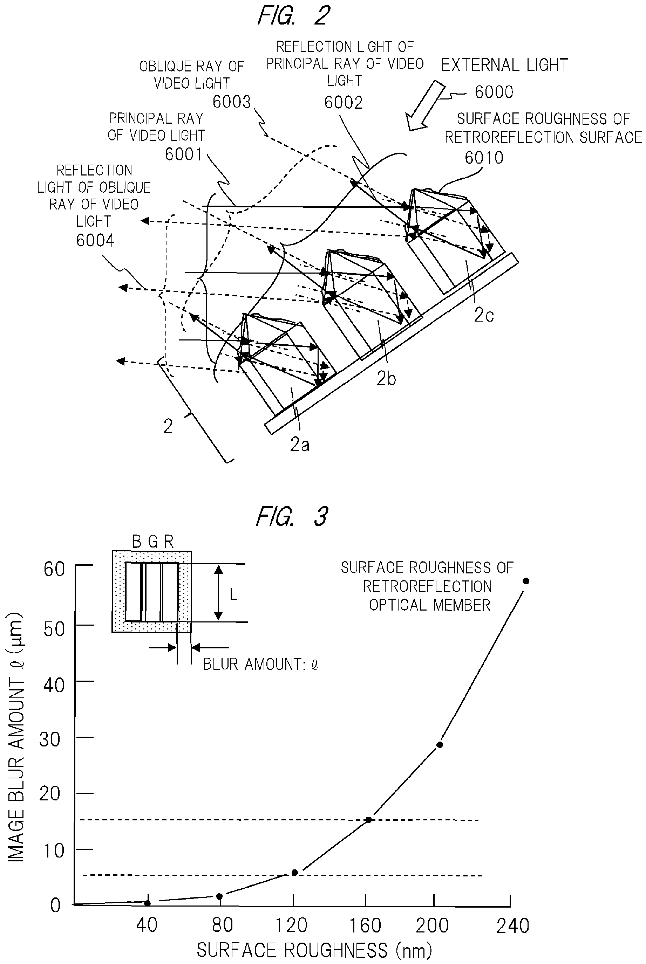

The video light reflected on the retroreflection optical member has a wide-angle divergence property as similar to the video display source. On a surface of the retroreflection optical member, hexahedral reflection members as shown in FIG. 1(B) are arranged. A reflection surface of the retroreflection optical member 2 is hexahedral as shown in FIG. 2, and therefore, a ghost image is generated because of reflected light 6004 generated by video light (oblique ray of the video light) 6003 obliquely entering the retroreflection optical member 2 (reflection members 2a, 2b, 2c or others) in addition to reflected light 6002 generated by normal video light (principal ray of the video light) 6001, and the ghost image reduces the video quality of the air floating video.

Since the reflection member of the retroreflection optical member 2 shown as a related-art example is hexahedral, a plurality of ghost images from a first ghost image to a sixth ghost image (not illustrated) are generated in addition to the normal air floating video. Therefore, this causes such a big problem that a person other than a viewing person (user) also views a ghost image that is the same air floating video, and the resolution of the air floating video apparently significantly decreases, or the like. Note that an example of a structure for achieving retroreflection using reflection caused by the hexahedron shown in FIG. 1(B) has been described here. There are not only the above-described problem but also a problem that is generation of a ghost image because of a similar reason in an optical member providing a retroreflected video by at least two or more reflections causing retroreflection. The hexahedron having the protrusion-shaped reflection surface has been described above. However, a hexahedron having a concaved reflection surface relative to its surroundings provides a similar effect.

In addition, there is a configuration in which video light from a display apparatus having a narrow-angle directionality described later is reflected by a retroreflection optical member to form the air floating video. According to an experiment by the inventors, in the resultant air floating video, not only the ghost image described above but also a blur have been visually recognized for each pixel of a liquid crystal display panel as shown in FIG. 3.

With reference to FIG. 1, the configuration of the air floating video display apparatus according to the present embodiment will be more specifically described. As shown in FIG. 1(A), a display apparatus 1 configured to diverge video light of a specific polarization wave at a narrow angle is arranged in a direction oblique to a transparent member 100 such as glass (that is a direction of an optical axis 5001). As shown in the drawing, this oblique direction is a predetermined direction having such an angle as to be oblique to a direction of a plane of the transparent member 100 and to a direction perpendicular thereto. The display apparatus 1 includes a liquid crystal display panel 11 that is a video source configured to emit the video light, and a light source (namely a backlight) 13 configured to produce the light of the specific polarization wave having the narrow-angle divergence property. The display panel according to the present embodiment will be explained while exemplifying the liquid crystal display panel.

The video light of the specific polarization wave emitted from the display apparatus 1 is reflected by a polarization splitter 101 having a film arranged on the transparent member 100 and configured to selectively reflect the video light of the specific polarization wave, and the reflected light enters a retroreflection optical member 2 in a direction of an optical axis 5002. In the drawing, the polarization splitter 101 is formed in a sheet shape, and is bonded to a surface (that is a lower surface as shown in the drawing) of the transparent member 100. A λ/4 plate 21 is arranged on a video-light entering surface of the retroreflection optical member 2. The video light is converted from the specific (one) polarization wave to the other polarization wave when being transmitted through the λ/4 plate 21 twice in total that are entering to and emission out from the retroreflection optical member 2.

Here, the polarization splitter 101 configured to selectively reflect the video light of the specific polarization wave has a property that transmits light of the polarization-converted other polarization wave. Therefore, in the direction of the optical axis 5002, the polarization-converted video light of the specific polarization wave is transmitted through the polarization splitter 101. The video light having been transmitted through the polarization splitter 101 forms an air floating video 220 that is an actual image at a predetermined position outside the transparent member 100 (that is on an upper side in the drawing) in a direction of an optical axis 5003.

Note that the light forming the air floating video 220 is aggregation of light rays converging from the retroreflection optical member 2 to an optical image of the air floating video 220. These light rays rectilinearly propagate even after being transmitted through the optical image of the air floating video 220. Therefore, the air floating video 220 is a video having high directionality as different from the diverged video light formed on a screen by a general projector or the like. Therefore, in the configuration of the drawing, the air floating video 220 is visually recognized as a suitable bright video when being visually recognized by a user U (corresponding eyepoint) in a direction of an arrow A. However, the air floating video 220 cannot be visually recognized as a video at all when being visually recognized by a different person in, for example, a direction of an arrow B different from the direction of the arrow A

The property of the high directionality is very preferable when being applied to, for example, a system displaying the video information that is necessary only for a driver (a user who has an eye point position corresponding to the direction A), a system displaying information having high confidentiality that needs to be confidential to a different person who is outside the vehicle and who faces the driver (a person who has an eye point corresponding to the direction B) or a person at a different position inside the vehicle, and/or the like.

### <Improvement of Performance of Air Floating Video Display Apparatus according to Present Invention>

In the related-art air floating video display apparatus, light polarization axes of the video light after the reflection are sometimes ununiform depending on a performance of the retroreflection optical member 2. In this case, a part of the video light having the ununiform light polarization axes is reflected by the polarization splitter 101, and returns to the display apparatus 1. This light is reflected again by a video display surface of the liquid crystal display panel 11 configuring the display apparatus 1, and forms the ghost image as described above, and therefore, may reduce the video quality of the air floating video 220. Accordingly, in the present embodiment, the video display surface of the display apparatus 1 is provided with an absorbance-type light polarizer 12. The video light emitted from the display apparatus 1 is transmitted through the absorbance-type light polarizer 12, and the reflection light returning from the polarization splitter 101 is absorbed by the absorbance-type light polarizer 12. In the manner, the absorbance-type light polarizer 12 can suppress the re-reflection, and can prevent the reduction of the video quality of the air floating video 220 due to the ghost image.

To the polarization splitter 101, a member made of for example, a reflection-type light polarizer, a metal multilayer film that reflects the specific polarization wave or the like may be applied.

Next, FIG. 1(B) shows a surface shape of a retroreflection optical member produced by Nippon Carbide Industries Co., Inc., used as the typical retroreflection optical member 2 for this study. This retroreflection optical member has an in-plane orderly-aligned hexagonal prism (retroreflector). The light ray entering the orderly-aligned hexagonal prism is reflected on a wall surface and a bottom surface of the hexagonal prism, is emitted as the retroreflection light in a direction corresponding to the incident light, and forms a normal video R1 (that is an image formed at a predetermined position) of the air floating video 220 shown in FIG. 1(A). The retroreflection optical member 2 also achieves a similar effect when a bottom surface of the hexagonal prism is provided with a reflection surface so as to be a surface in contact with air as shown in FIG. 1(B), a hexagonal corner surface is formed above the reflection surface, and a hexahedron and the hexagonal prism are hollow while the rest is filled with resin.

On the other hand, as shown in FIG. 2, the ghost image different from the normal image R1 is formed in accordance with the video light having obliquely entered the retroreflection optical member 2 among the video light emitted from the display apparatus 1. The air floating video display apparatus of the present invention displays the air floating video that is the actual image based on the video displayed on the video display apparatus 1. Resolution of this air floating video significantly depends on not only the resolution of the liquid crystal display panel 11 but also an outer shape "D" and a pitch "P" of the hexagonal prism (retroreflector) configuring the retroreflection optical member 2 shown in FIG. 1(B). For example, when a WUXGA liquid crystal display panel of 7 inches (1920 × 1200 pixels) is used, even if one pixel (corresponding one triplet) is about 80 µm, if the diameter D and the pitch P of the hexagonal prism are 240 µm and 300 µm, respectively, one pixel of the air floating video is equivalent to 300 µm. Therefore, effective resolution of the air floating video decreases down to about 1/3.

Accordingly, in order to make the resolution of the air floating video equal to the resolution of the display apparatus 1, it is desirable to make the diameter D and the pitch P of the hexagonal prism that is the retroreflection optical member 2 close to one pixel of the liquid crystal display panel 11. Meanwhile, in order to suppress the moire based on the pixels of the liquid crystal display panel 11 and the hexagonal prism that is the retroreflection optical member 2, each pitch ratio may be designed to deviate from an integral multiple of one pixel. Regarding the shape, all sides of the hexagonal prism that is the retroreflection optical member 2 may be arranged not to overlap all sides of one pixel of the liquid crystal display panel 11.

Furthermore, as shown in FIG. 2, when external light 6000 enters the retroreflection optical member 2 in an oblique direction, the external light 6000 is reflected on the surface of the retroreflection optical member 2 (hexagonal prisms 2a, 2b, 2c, and the like), forms the ghost images in various directions, and therefore, significantly reduce the video quality of the air floating video. Through experiment, the present inventors have found a relation between a blur amount "1" and a pixel size "L" of an acceptable air floating video in order to improve the video quality and the visual recognition of the air floating video. At that time, the inventors have prepared a display apparatus 1 to find the relation by combining a liquid crystal display panel having a pixel pitch of 40 µm and a light source having a narrow divergence angle property (for example, a divergence angle of 15°) of the present embodiment

It has been found that, regarding the blur amount 1 that deteriorates visual recognition, 40% or less of the pixel size is desired, and the blur is hardly observed if it is 15% or less. It has been found that, in the surface roughness of the reflection surface (a surface roughness 6010 of the retroreflection surface in FIG. 2) having the acceptable blur amount 1 at that time, an average roughness is 160 nm or less within a measurement distance of 40 µm, and the surface roughness of the reflection surface is desired to be 120 nm or less in order to achieve the hardly-observed blur amount 1. Therefore, it is desired to reduce the surface roughness of the retroreflection optical member 2 described above, and desired to provide the surface roughness including the reflection film forming the reflection surface and its protection film to have the above-described value or less.

Meanwhile, in order to manufacture the retroreflection optical member 2 at a low cost, the retroreflection optical member may be shaped by a roll press method. Specifically, this method is a method of arranging and forming a plurality of the retroreflectors (hexagonal prism in FIG. 2) on a film. This method forms a necessary shape by forming an inverse shape of the shape to be formed on a roll surface, applying an ultraviolet curing resin onto a base material for fixation, and causing the portion to be transmitted through a gap between the rolls, and then, hardens the shape by emitting the ultraviolet ray thereto, and this manner provides the retroreflection optical member 2 having a desirable shape.

The display apparatus 1 of the present embodiment shown in FIG. 1 is made of the liquid crystal display panel 11 and the light source 13 generating the light of the specific polarization wave having the narrow-angle divergence property described later. Therefore, a possibility of the oblique entering (FIG. 2) of the video light into the retroreflection optical member 2 is made small. This provides an apparatus that is excellent in a structure in which the ghost video is difficult to be viewed because of having low luminance even if the ghost image is generated.

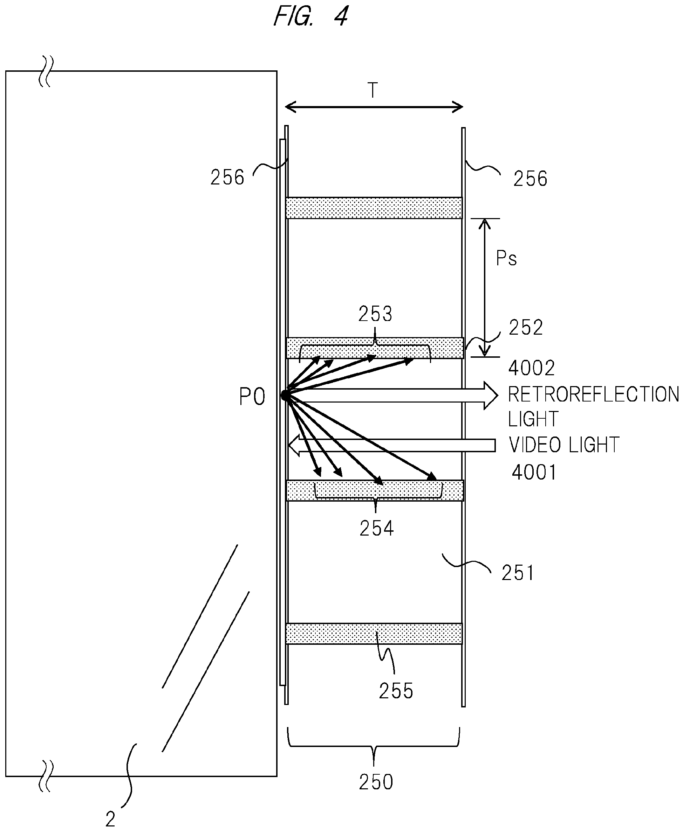

Further, a video-light control film (external-light control film, optical sheet) 250 making a view angle narrow as shown in FIG. 4 may be arranged on the surface of the retroreflection optical member 2. In this optical sheet 250, a transparent portion 251 that is a light transmitting member and a black portion 255 that is a light absorbing member (that is a dot pattern region in the drawing) are alternately arranged in a plane direction. The light absorbing member extends in a depth direction of FIG. 4. The diverged light emitted from the video source is blocked by the black portion 255 when obliquely entering the retroreflection optical member 2, and besides, is absorbed by the black portion 255 even when diverging (to be, for example, divergence 253 and divergence 254 in FIG. 4) because of the surface roughness of the retroreflection optical member 2. Therefore, the formation of the ghost image of the air floating video can be suppressed. Of the video light 4001 normally entering (the video light nearly vertically entering) the retroreflection optical member 2, the normal reflection light (retroreflection light 4002) not diverging is transmitted through the transparent portion 251, and forms the air floating video.

As the optical sheet 250 for suppressing the diverged light of the retroreflection optical member 2, for example, a view-angle control film (VCF: View Control Film) produced by Shin-Etsu Polymer Co., Ltd., is suitable. This film has a structure in which transparent silicon and louver-shaped black silicon having high blocking property are alternately arranged, and therefore, the obliquely entering light is absorbed by the black silicon. Therefore, the same effect as that of the optical sheet 250 of the present embodiment (FIG. 4) can be expected.

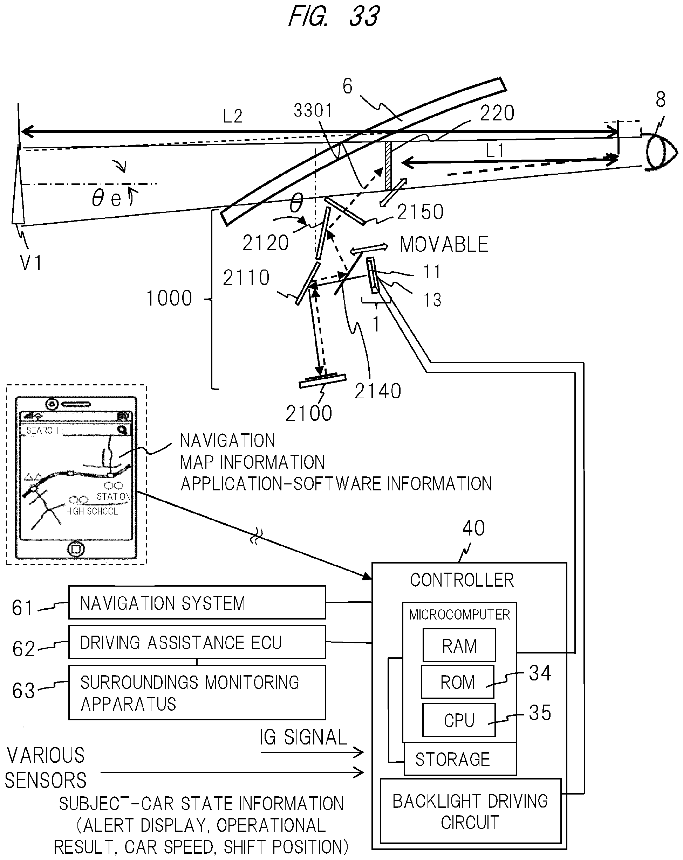

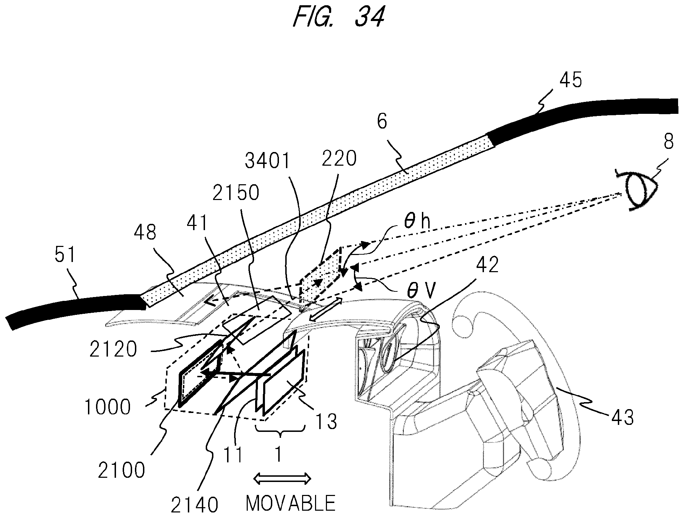

In order to reduce the formation of the ghost image of the air floating video, in the case of usage of the above-described video-light control film 250, a pitch "Ps" between the light transmitting member (transparent portion 251) and the light absorbing member (black portion 255) is desirably equal to or smaller than 10 times the pixel of the video displayed by the video source. Regarding a thickness 'T' of the video-light control film 250, if the view angle "a" is made to be smaller than 45 degrees, "h/w" may be only larger than 1.0. In other words, as the video-light control film 250, it is preferable to select an object having a relation of "0.5 < Ps/T < 2.0". A tilt angle of the black portion 255 may be only vertically arranged (at a tilt angle of 0) with respect to the retroreflection optical member 2. Even in embodiments shown later in FIGs. 33 and 34, when the above-described video-light control film 250 is arranged on a surface of a retroreflection optical element 2100, the formation of the ghost image can be significantly reduced.

### <First Principle of Downsizing of Air Floating Video Display Apparatus>

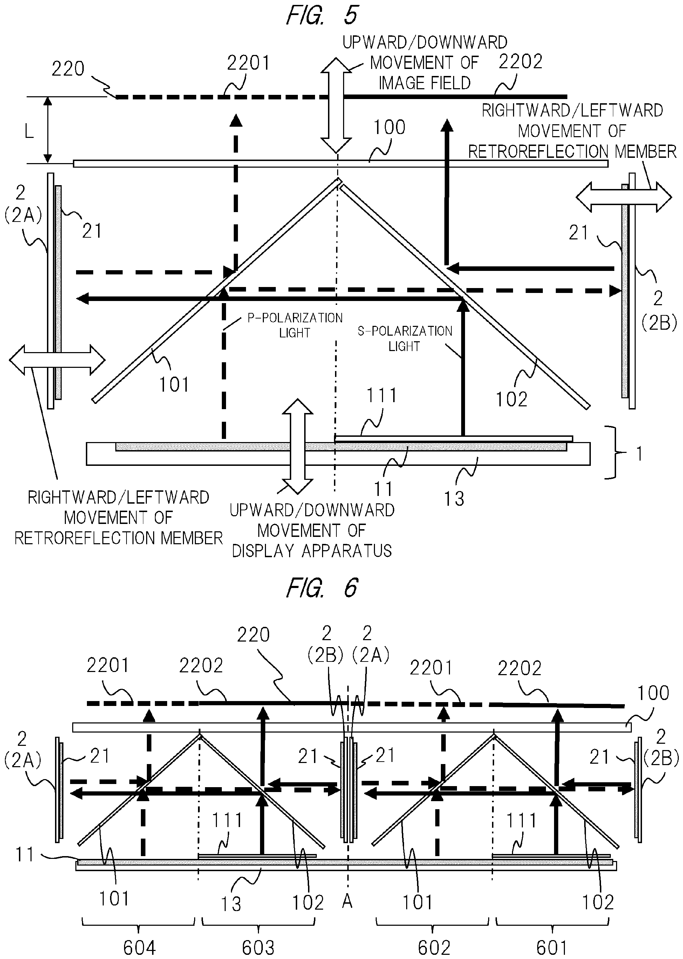

With reference to FIGs. 5 and 6, a first technical means for downsizing the air floating video display apparatus will be explained FIG. 5 is an explanatory diagram showing a principle of the downsizing. The display apparatus 1 is configured to include a light source 13 having a narrow-angle divergence property and a liquid crystal display panel 11 serving as a video display element, and a λ/2 plate 111 (half waveplate) is arranged in a right-half region of the video display surface of the liquid crystal display panel 11. As a result, the video light emitted from the right-half region and a left-half region in FIG. 5 have different polarization directions from each other. When the reflection and the transmission are divided to correspond to the respective polarization directions of divided left polarization splitter 101 and right polarization splitter 102, a dimension of the air floating video display apparatus in the thickness direction (that is a depth direction, an up and down direction in FIG. 5) can be shortened.

More specifically, the video light on the right side (right-half region) of the liquid crystal display panel 11 in the drawing is converted to an S polarization wave (illustrated with a solid line in the drawing) by the arrangement of the λ/2 plate 111, and one (right) polarization splitter 102 reflects the S polarization wave but transmits a P polarization wave (illustrated with a broken line in the drawing). On the other hand, the video light on the left side (left-half region) of the liquid crystal display panel 11 in the drawing is converted to the P polarization wave without the arrangement of the λ/2 plate 111, and the other (left) polarization splitter 101 reflects the P polarization wave but transmits the S polarization wave. In this manner, the S-polarized video light having been reflected by the right polarization splitter 102 is transmitted through the left polarization splitter 101, and is made incident and reflected on a left retroreflection optical member 2 (2A) to form the air floating video. On the other hand, the P-polarized video light having been reflected by the left polarization splitter 101 is transmitted through the right polarization splitter 102, and is made incident and reflected on a right retroreflection optical member 2B to form the air floating video.

On respective surfaces of the right and left retroreflection optical members 2 (2A, 2B), a λ/4 plate 21 (phase retarder, 1/4 waveplate) is arranged. The video light having been reflected by the left retroreflection optical member 2A is transmitted through the λ/4 plate 21 twice in total, and therefore, is converted to the P-polarization light The P-polarized video light after the conversion is reflected by the left polarization splitter 101, is transmitted through the transparent portion 100, and displays an air floating video 2201 (that is an air floating video illustrated with a broken line in the left region) at a predetermined position on an upper side. Similarly, the video light having been reflected by the right retroreflection optical member 2B is transmitted through the λ/4 plate 21 twice in total, and therefore, is converted to the S-polarization light. The S-polarized video light after the conversion is reflected by the right polarization splitter 102, is transmitted through the transparent portion 100, and displays an air floating video 2202 (that is an air floating video illustrated with a solid line in the right region) at a predetermined position on an upper side.

The configuration of the present embodiment has a structure in which positions of the retroreflection optical members 2 (2A, 2B) are movable in a right and left direction illustrated with an arrow in the drawing. By the movement of the retroreflection optical members 2 (2A, 2B), the display position of the air floating video 220 (also referred to as image field) can be changed to an optional position within a predetermined range in the thickness direction (that is the up and down direction in FIG. 5). An illustrated gap (distance) "L" is a distance in the thickness direction between the transparent portion 100 and the image field of the air floating video 220 (2201, 2202). This distance L can be changed by the movement In this case, it is unnecessary to change the dimension of the air floating video display apparatus in the thickness direction (that is the up and down direction in FIG. 5). For example, when the two retroreflection optical members 2 (2A, 2B) on the right and left sides are moved to separate from each other for changing the position of the image field, a light path length of the video light is lengthened on the lower side of the transparent portion 100, and therefore, the position of the image field is changed to a lower position in the thickness direction by the lengthening. When the two retroreflection optical members 2 (2A, 2B) on the right and left sides are moved to come close to each other, the light path length of the video light is shortened on the lower side of the transparent portion 100, and therefore, the position of the image field is changed to an upper position in the thickness direction by the shortening.

Also, the configuration of the present embodiment has a structure in which a position of the display apparatus 1 is movable in an up and down direction illustrated with an arrow in the drawing. By the movement of the display apparatus 1, the display position of the air floating video 220 can be similarly changed to an optional position within a predetermined range in the thickness direction. In this case, it is unnecessary to change the dimension of the air floating video display apparatus in the right and left direction. For example, when the display apparatus 1 is moved downward to separate from the polarization splitter, the light path length of the video light is lengthened on the lower side of the transparent portion 100, and therefore, the position of the image field is changed to a lower position in the thickness direction by the lengthening.

As a structure capable of moving the retroreflection optical members 2 and the display apparatus 1, for example, a driving mechanism such as a motor may be used. A controller of the air floating video display apparatus may control this driving mechanism. Alternatively, the user may manually operate this structure to move the components.

As shown in FIG. 5, in the present embodiment, in the video displayed on the liquid crystal display panel 11, two polarization splitters (101, 102) function as a mirror. Therefore, the air floating video 220 is horizontally flipped from the video on the liquid crystal display panel 11. Specifically, the video in the right region with the λ/2 plate 111 is converted from the S-polarized wave to the P-polarized wave to become the air floating video 2201 in the left region, while the video in the left region without the λ/2 plate 111 is converted from the P-polarized wave to the S-polarized wave to become the air floating video 2202 in the right region. Therefore, a start position of the video display of the video displayed on the liquid crystal display panel 11 and a display order of the video may be appropriately selected based on the number of divisions, a method or others in consideration of the above-described horizontal flipping.

In the present embodiment (FIG. 5), as a premise, the video light emitted from the liquid crystal display panel 11 is the P-polarization light, and the emitted light from the right-half region of the video display surface of the liquid crystal display panel 11 is the S-polarization light since the λ/2 plate 111 is arranged in the right-half region. The premise is not limited to this, and the video light emitted from the liquid crystal display panel 11 may be the S-polarization light

On the upper side of the display apparatus 1 of the air floating video display apparatus of FIG. 5, one set of the two polarization splitters (that are the left polarization splitter 101 and the right polarization splitter 102) on the right and left sides are obliquely arranged at a predetermined position between one set of the two retroreflection optical members 2 (that are the left retroreflection optical member 2A and the right retroreflection optical member 2B) on the right and left sides. The two polarization splitters on the right and left sides and the two retroreflection optical members 2 on the right and left sides are symmetrical to each other across a center position (that is a border between the regions with and without the λ/2 plate 111) of the liquid crystal display panel 11 in the right and left direction as illustrated with a dashed dotted line. The right polarization splitter 102 is arranged on the upper side of the right region with the λ/2 plate 111 while the left polarization splitter 101 is arranged on the upper side of the left region without the λ/2 plate 111.

The transparent portion 100 (configuring the opening portion) is arranged on the upper side of these components to face the display apparatus 1. A main surface of the left polarization splitter 101 is arranged in an oblique direction so as to reflect the video light emitted from the left region toward the right polarization splitter 102 and the right retroreflection optical member 2B (reflect the video light at approximately 90 degrees in FIG. 5). The right polarization splitter 102 is arranged in a different oblique direction from that of the left polarization splitter 101 so as to reflect the video light emitted from the right region toward the left polarization splitter 101 and the left retroreflection optical member 2A (reflect the video light at approximately 90 degrees in FIG. 5). As shown in FIG. 5, the retroreflection optical members 2 (2A, 2B) are arranged almost vertically to the transparent member 100 of the opening portion of the air floating video display apparatus. In this manner, the ghost image formed by the incident external light on the retroreflection optical members 2 can be reduced.

With reference to FIG. 6, a second technical means for further downsizing of the air floating video display apparatus will be explained In the first embodiment of FIG. 5, a screen of the liquid crystal display panel 11 that is the video source is divided into two. On the other hand, in the second embodiment shown in FIG. 6, the number of divisions of the screen of the liquid crystal display panel 11 that is the video source is four. In this manner, the further downsizing can be achieved.

In the second embodiment shown in FIG. 6, the two retroreflection optical members 2 are arranged at center of the screen (that is a position of a broken line A) as compared to the first embodiment shown in FIG. 5. In the second embodiment, two configurations as described in the first embodiment are arranged in parallel in the right and left direction of the screen of the display apparatus 1 in the drawing. In this manner, the display screen of the liquid crystal display panel 11 is divided into four to provide air floating videos (2201, 2202, 2203 and 2204) as the air floating video 220 corresponding to the respective divided regions. As a premise, in the present embodiment, the video light emitted from the liquid crystal display panel 11 is the P-polarization light (illustrated with a broken line). Since the λ/2 plate 111 is arranged on the rightmost 1/4 screen 601 and the center-left 1/4 screen 603 of the video display surface of the liquid crystal display panel 11 in the right and left direction of FIG. 6 (that is a direction configuring the display plane), the emitted light can be converted to the S-polarization light (illustrated with a solid line).

As described above, in the configuration of the second embodiment, a set of the retroreflection optical member 2 (2A, 2B) and the polarization splitters (101, 102) is arranged to be parallel in a direction of the screen (video display surface). As a result, since the reflection and the transmission are separated from each other to correspond to the respective polarization directions, the dimension of the air floating video display apparatus in the thickness direction (that is the up and down direction in FIG. 6) can be further shortened. If the size of the screen (video display surface) is the same between the configurations of FIGs. 5 and 6, the components (two sets of the retroreflection optical members 2 and two sets of the polarization splitters) of FIG. 6 are smaller in the dimension than the components (one set of the retroreflection optical members 2 and one set of the polarization splitters) of FIG. 5 as shown in the drawing. Therefore, the dimension in the thickness direction is shorter in the configuration of FIG. 6 than the configuration of FIG. 5.

Even in the structure of the second embodiment, the position of the retroreflection optical member 2 may be movable in the right and left direction of FIG. 6 or the position of the display apparatus 1 may be movable in the up and down direction of FIG. 6 as similar to the first embodiment In this manner, the display position of the air floating video 220 can be changed to an optional position within a predetermined range in the up and down direction of FIG. 6. In this case, it is unnecessary to change the dimension of the air floating video display apparatus in the thickness direction.

### <Second Principle of Downsizing of Air Floating Video Display Apparatus>

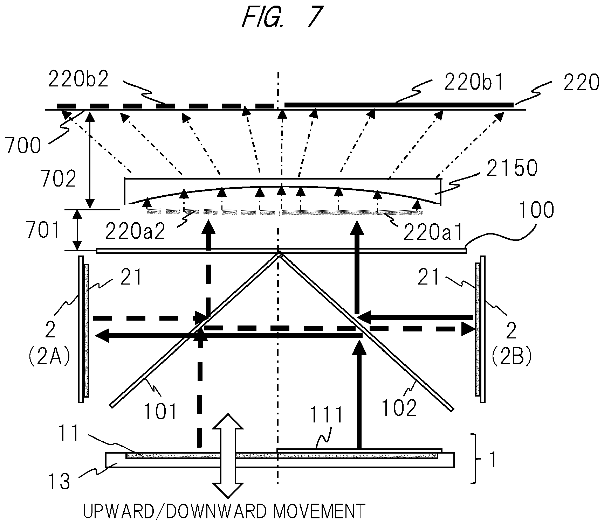

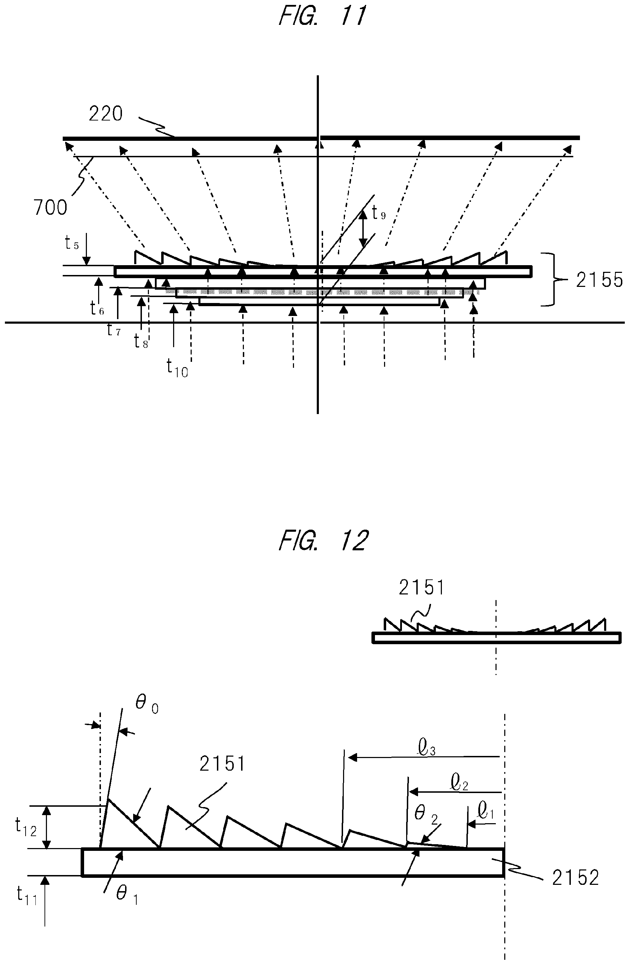

With reference to FIGs. 7 and 12, a third technical means for downsizing the air floating video display apparatus will be explained FIG. 7 is an explanatory diagram showing a principle of the downsizing. The display apparatus 1 is configured to include a light source 13 having a narrow-angle divergence property and a liquid crystal display panel 11 serving as a video display element In the configuration of FIG. 7, an optical element 2150 is arranged at an upper position near the transparent member 100 in addition to the components similar to those of FIG. 5. The optical element 2150 has a function of enlarging the air floating video. By the lens function of the optical element 2150, an area of the air floating video 220 at an imaging position (virtual plane 700) is made larger than the video display area of the liquid crystal display panel 11 that is the video source. Also, in the present embodiment, the imaging position of the air floating video 220 can be appropriately selected by the movement of the display apparatus 1 in the up and down direction in the drawing.

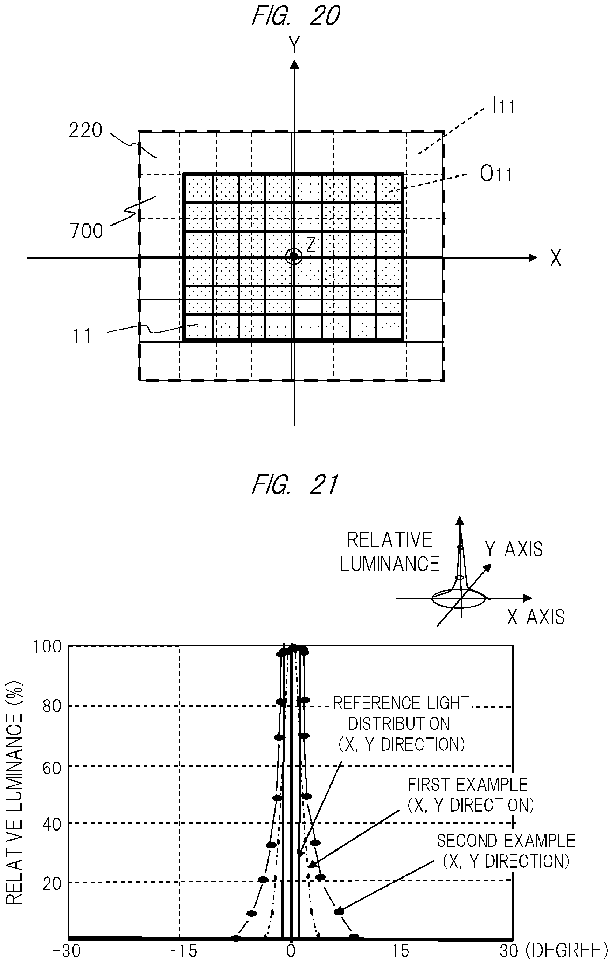

An optical element is used as the optical element 2150, the optical element having, for example, a divergent function of providing telecentric emission light having a narrow-angle divergence property ("reference luminous intensity distribution", "first example" and "second example") shown in FIG. 21. In this case, by the optical element 2150, an emission direction of the video luminous flux of the video light emitted from the liquid crystal display panel 11 is controlled toward a region corresponding to each pixel assumed on the virtual plane 700 for a size 220a1 (illustrated with a solid line) and a size 220a2 (illustrated with a broken line) of the original air floating video. In this manner, an enlarged image 220b1 and an enlarged image 220b2 are formed as the air floating video 220 at a desirable position on the virtual plane 700.

The air floating video (having the size 220a1) in the right region (illustrated with the solid line) at the original position is enlarged by the optical element 2150 to become the enlarged image 220b1 in the right region (illustrated with the solid line) at a position on the virtual plane 700. The air floating video (having the size 220a2) in the left region (illustrated with the broken line) is enlarged by the optical element 2150 to become the enlarged image 220b2 in the left region (illustrated with the broken line). The original air floating video position in a case without the optical element 2150 is a position separated by a distance 701 from the transparent member 100 in the thickness direction. The position of the air floating video 220 as the enlarged image in a case with the optical element 2150 is a position of the virtual plane 700 further upwardly separated by a distance 702 from the original position.

The present embodiment has a structure with a changeable optical distance between the video source and the retroreflection optical member 2. More specifically, the embodiment has a structure in which the display apparatus 1 is movable in an up and down direction. Since the optical distance can be changed by this structure, the position and the size of the formed air floating video 220 (enlarged image) can be changed

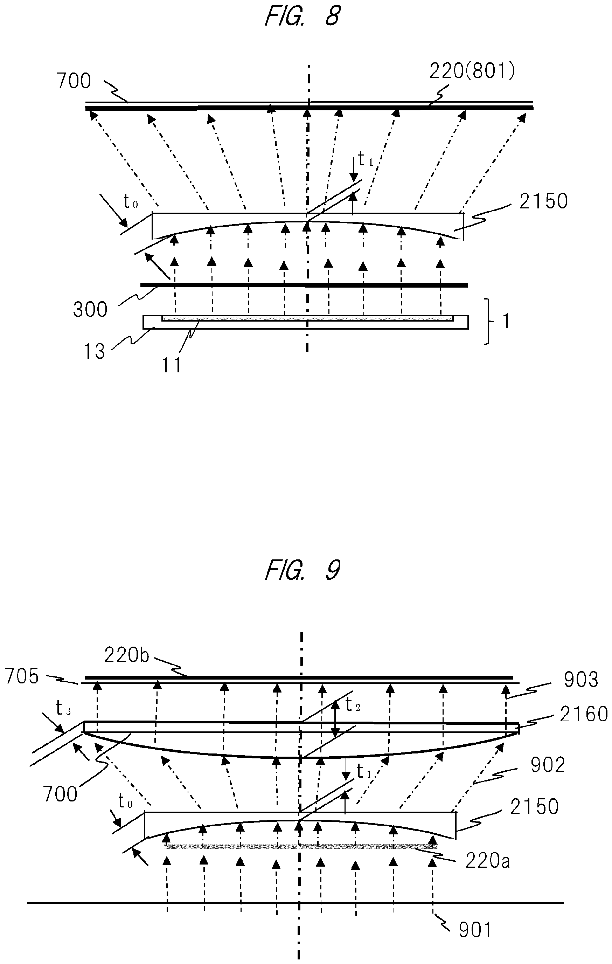

With reference to FIG. 8, a fourth technical means for downsizing the air floating video display apparatus will be explained In a fourth embodiment shown in FIG. 8, a micro lens array 300 is arranged between an upper side of the display apparatus 1 and the optical element 2150. The video light including the narrow-angle divergent light emitted from each pixel of the liquid crystal display panel 11 of the display apparatus 1 that is the video source aerially forms an image corresponding to each pixel because of functions of micro lenses arranged in matrix form in the micro lens array 300. In this case, in the present embodiment, the imaging position (aggregation of imaging points) of the air floating video 220 is controlled by a focal length of the micro lens. Therefore, the fourth embodiment of FIG. 8 can achieve the more downsized the air floating video display apparatus than those of three systems (FIGs. 5, 6 and 7) using the retroreflection optical member 2 and the polarization splitters (101 and 102).

The present embodiment provides an enlarged image (enlarged image 801 at a position of the virtual plane 700) of the air floating video 220 while changing the emission direction of the video luminous flux for each pixel for the original size of the air floating video by using the optical element 2150 arranged between the air floating video 220 and the micro lens array 300 and having the function (divergent function) of controlling the direction of the video luminous flux and increasing the focal length of the micro lens array 300 for increasing the floating amount (protrusion amount, distance in the thickness direction) of the air floating video 220.

The optical element 2150 has a function of directing the pixel of the air floating video corresponding to each pixel of the video display surface of the liquid crystal display panel 11 to a desirable position. This function will be explained in detail with reference to FIG. 20. In the above-described embodiments, the optical element 2150 is arranged between the air floating video 220 (virtual plane 700) and the liquid crystal display panel 11 that is the video source, and controls the imaging position of the pixels (illustrated with a broken line in FIG. 20) of the air floating video 220 on the X-Y plane corresponding to the matrix formed pixels (illustrated with a solid line in FIG. 20) of the liquid crystal display panel 11. On the other hand, in the first to third embodiments, the imaging position in the Z axis direction (thickness direction) is unambiguously determined by a gap (distance) L between the retroreflection optical member 2 and the liquid crystal display panel 11, and the image is formed at a predetermined position after the reflection by the retroreflection optical member 2. In the system of the fourth embodiment of FIG. 8 using the micro lens array 300, the imaging position can be controlled by the focal length of the micro lens.

FIG. 20 shows a state in which coordinates of center of the display region of the liquid crystal display panel 11 are as an origin point on the X-Y plane while corresponding coordinates of center of the screen of the air floating video 220 are similarly as an origin point on the X-Y plane. The pixels of the liquid crystal display panel 11 are arranged in the matrix form in a screen horizontal direction (X) and a screen vertical direction (Y), and each of pixels (three colors of R, G and B are explained as one pixel below) has an address (Onn). On the other hand, even on the virtual plane 700 corresponding to the air floating video 220, an address (Inn) corresponding to each pixel of the liquid crystal display panel 11 is provided, and the video luminous flux is directed to the corresponding desirable position on the X-Y plane of the display video by the lens function of the optical element 2150.

More specifically, the most effective technical means for enlarging the air floating video may be as follows, in the optical system of the present invention described in the first to third embodiments providing the air floating video by making the video luminous flux having the narrow-angle divergence property incident from each pixel of the liquid crystal display panel 11 to the retroreflection optical member 2 and reflecting the video luminous flux. More specifically, the video luminous flux corresponding to each pixel (that is the video light emitted from each pixel) may be made incident as individual video luminous flux on the optical element 2150, and may be directed to the desirable position on the X-Y plane by the lens function provided by shapes of the light entering surface and the light emitting surface of the optical element 2150. In this case, the imaging position of the air floating video 220 is unambiguously determined by the above-described distance L between the retroreflection optical member 2 and the liquid crystal display panel 11, and the image is formed at the predetermined position after the reflection by the retroreflection optical member 2. On the other hand, in the system using the micro lens array 300 of the fourth embodiment, the imaging position can be controlled by the focal length of the micro lens.

Next, with reference to FIG. 21, the optimum divergence property of the video light emitted from each pixel of the liquid crystal display panel 11 that is the video source will be explained. The ghost image generated by the retroreflection optical member 2 can be significantly reduced by the narrow-angle property that is equal to or smaller than 2 degrees shown as the "reference luminous intensity distribution" in FIG. 21. Meanwhile, the optimum divergence property is necessary in order to provide the uniform brightness even to the periphery of the air floating video. If a dimension of the screen in the horizontal direction is equal to or smaller than 65 nm since a distance between both eyes of the viewing person is 65 nm on average, the air floating video having been reflected by the retroreflection optical member 2 can have the brightness without any problem in practice even on the periphery of the screen under the reference luminous intensity distribution shown in FIG. 21. And, in order to increase an enlarging magnification of the air floating video, the enlarging magnification is controlled by the lens function of the optical element 2150 to increase the bending amount or the air floating amount of the video luminous flux as described above. In this case, when the enlarging magnification is increased to be twice or more that of the liquid crystal display panel 11 that is the video source, if the divergence property spreading toward the bottom as shown in the "second example" is provided, this case can achieve not only the brightness without any problem in practice even to the periphery of the screen but also the brightness without any problem in practice even to the periphery of the screen even in viewing of the air floating video in the oblique direction.

Further, in the method of enlarging the air floating video in the present invention, the pixel itself of the enlarged image is not enlarged, and each pixel image is formed at the desirable position, and therefore, a distance between the pixels is increased. Under the "reference luminous intensity distribution" shown in FIG. 21, a gap that is equal to or larger than the pixel is formed between the pixels. In order to reduce this gap, it is necessary to provide the divergence property spreading toward the bottom as shown in the "first example" and the "second example". As a rough indicator, if the spreading of the pixels due to the above-described divergence property exceeds 30% of the distance between the pixels of the air floating video, image continuity is not uncomfortable. If the spreading exceeds 80%, the pixels overlap each other to reduce focus texture of the air floating video.

The optical element 2150 of the present embodiment has a function of spreading the video luminous flux emitted from the pixels of the liquid crystal display panel 11 when being arranged between the video source (display apparatus 1) and the imaging position of the air floating video. Specifically, the imaging point itself of the air floating video is controlled to enlarge the image (to increase the coordinates on the X-Y plane in FIG. 20). Further, when an optical axis of the optical element 2150 shifts from the center axis of the video source (display apparatus 1), the partial enlarging magnification and imaging position of the enlarged image of the air floating video 220 can be controlled, and therefore, the air floating video that is a virtual three-dimensional video can be provided.

FIG. 9 shows a configuration of an air floating video display apparatus of a fifth embodiment In this embodiment, video luminous flux 901 (illustrated with an arrow of a broken line) having a narrow-angle divergence property (almost collimated light) emitted from each pixel of a video source (display apparatus not illustrated) is spread (the luminous flux is diverged) by a first optical element 2150 that is the optical element 2150, and the spread video luminous flux 902 (illustrated with an arrow of a dashed dotted line) is collected by a second optical element 2160 arranged on the virtual plane 700 and is converted to video luminous flux 903 (illustrated with an arrow of a broken line) that is the collimated light. By this video luminous flux 903 that is the collimated light, the air floating video 220b as the enlarged image is displayed at a predetermined position 705. As a result, even in front viewing of the air floating video 220b or oblique viewing of the same, the video luminous flux can provide the brightness that is sufficient in practice in the entire region from the center of the screen to the periphery of the screen, In this case, the air floating video can become the air floating video 220b enlarged from the original size of the air floating video 220a corresponding to the position of the first optical element 2150.

In FIG. 9, an AR coating may be arranged on the light entering surface of the optical element 2150.

### <Specific Example of Optical Element of Enlarging Air Floating Video>

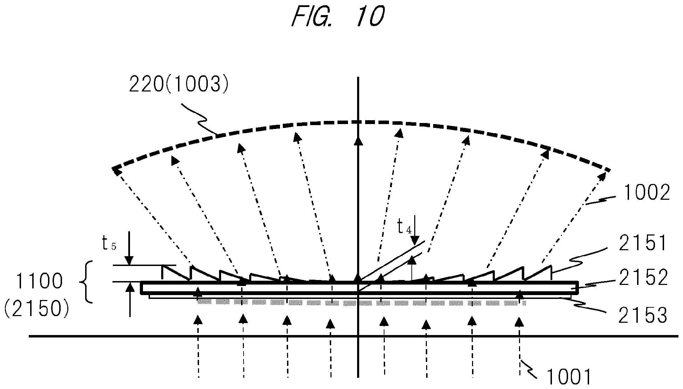

With reference to FIG. 10, a first specific example of the optical element of enlarging the air floating video will be explained FIG. 10 shows an optical element 1100 that is the first specific example of the optical element 2150. In a configuration of the embodiment of FIG. 10, as similar to FIG. 9, video luminous flux 1001 (illustrated with a broken line) emitted from each pixel of a video source (display apparatus not illustrated) is refracted toward the desirable position by the optical element 1100 having the function of spreading the video luminous flux 1001. This optical element 1100 is provided with a circular Fresnel shape (in other words, circular Fresnel lens) 2151 on an air-floating-video formation side of a substrate (board) 2152 (on an upper side in FIG. 10), and video luminous flux 1002 is directed toward the desirable position by this lens function to form the air floating video 220 (enlarged image 1101, three-dimensional air floating video).

In this case, the reflection light on the Fresnel lens surface made by the circular Fresnel shape 2151 forms the ghost image because of returning to the substrate 2152, being reflected again, and then, overlapping the original luminous flux that forms the air floating video. In order to reduce this ghost image, an anti-reflection film 2153 may be formed on the video-luminous-flux entering side (on a lower side in FIG. 1) of the substrate 2152. In this case, a Fresnel angle of the circular Fresnel lens arranged on the substrate 2152 varies depending on a distance "I" (such as "I1", "I2" or "I3") from the Fresnel center (illustrated with a dashed dotted line) as shown in FIG. 12. Therefore, the anti-reflection film 2153 arranged on the light entering surface may have the smallest reflectance at an angle at which the light reflected at the average Fresnel angle of the entire Fresnel lens enters the entering surface of the substrate 2152 after the reflection. Further, the smallest reflectance in a green-light range (530 nm to 570 nm) having the largest relative luminosity may be preferable.

The optical element 1100 is arranged so that center of the optical element 1100 is eccentric from an optical axis connecting center of the video display region of the video source (liquid crystal display panel 11) and center of an outer shape of the retroreflection optical member 2, and center of the three-dimensional air floating video (enlarged image 1103) in height is on an extension line of the eccentric center of the optical element 1100. An imaging position of the three-dimensional air floating video 220 corresponds to the virtual plane being substantially in parallel to the lens surface of the optical element 1100 and having an area of an enlarged lens surface. The optical element 1100 has a function of controlling the emission direction of the video luminous flux transmitted through the lens surface in accordance with tilt of the lens surface. The height coordinate information of the air floating video determined by the distance between the video source and the retroreflection optical member 2 is added to the planar coordinate information in the virtual plane corresponding to the region of the optical element 1100 through which the video luminous flux is transmitted, and, as result, a thickness of the optical element 1100 within the region is set to form the three-dimensional air floating video 220 (enlarged image 1103).

When the air floating video 220 is enlarged at a high magnification by the optical element 2150 (optical element 1100) that is the enlarging-system optical element in the usage of the specific technique for providing the air floating video 220, the image field of the air floating video 220 (enlarged image 1103) is curved as shown in FIG. 10. In order to reduce this curvature (curvature of the image field) by only the optical element 2150, a configuration of an optical element 2155 shown in FIG. 11 can be adopted. In the configuration shown in FIG. 11, in order to correct the curvature of the image field of the air floating video 220, the curvature of the image field is corrected by changing a thickness "t5" of a peripheral portion of the optical element 2155 relative to a center thickness "t9" of the same in accordance with the lens function to optimize the thickness equalizing a light path length (product of a refractive index and a physical length) from the entering surface of the optical element 2155 to the image field of the air floating video 220 in a light path in which the video luminous flux corresponding to the pixel is transmitted. In this case, for the thickness change, a shape resulted from overlapping planes (plane portions) t6, t7, t8 and others having a different thickness as illustrated is preferably applied in order to prevent the entering surface of the optical element 2155 from having the lens function.

In order to form the above-described circular Fresnel lens shape, the optical element 2155 is formed by, for example, molding using a prepared mold or replica. In this case, a resistance against separation from the mold is large depending on the outermost Fresnel shape of the optical element 2155, and therefore, optical problems such as deformation of the substrate and increase of the lens surface roughness are caused. Therefore, in order to improve the separation from the mold, a circular Fresnel lens shape 2151 needs to have a draft angle "θ0" as illustrated. Experience shows that an angle of two degrees or larger is enough for the draft angle θ0 but an angle exceeding 5 degrees increases a region that cannot reflect the light in the normal direction, and therefore, the ghost image is formed, and the brightness of the air floating video decreases.

In FIG. 10, anAR coating may be arranged on the light entering surface of the optical element 2150.

### <Technical Means for Increasing Degree of Freedom in Design of Display Position and Enlarging Magnification of Air Floating Video>

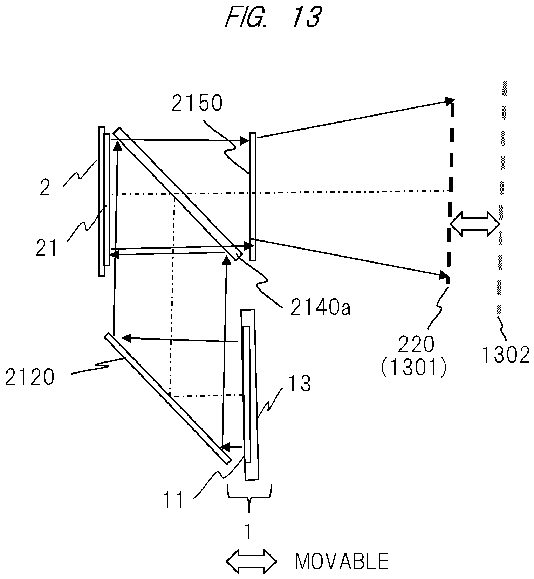

Next, with reference to FIGs. 13, 14 and 15, a technical means for increasing a degree of freedom in the display position of the air floating video will be explained

FIG. 13 shows a first embodiment of the present invention for increasing the degree of freedom in the display position and the enlarging magnification of the air floating video. FIG. 13 shows the structure of the air floating video display apparatus using the retroreflection optical member 2. The display apparatus 1 that is the video source is made of the liquid crystal display panel 11 and the light source 13 functioning as the image display apparatus. From the liquid crystal display panel 11, the video light of the specific polarization wave is emitted. In this case, in order to reduce the ghost image formed by the retroreflection optical member 2 as described above, a light source 13 having a narrow divergence angle as the divergence angle of the video light may be selected. As a result, the video light emitted leftward in the drawing from the display apparatus 1 is reflected upward by a reflection mirror 2120 without spreading, and propagates toward a polarization splitter 2140a. The video light of the specific polarization wave is first reflected by the polarization splitter 2140a, and then, is made incident and reflected on the retroreflection optical member 2 on the left side or others. The λ/4 plate 21 is arranged on the surface of the retroreflection optical member 2. The video light of the specific polarization wave emitted from the polarization splitter 2140a is reflected by the reflection surface of the retroreflection optical member 2 as well as being transmitted through the λ/4 plate 21 to be converted in terms of polarization. The converted video light of the other polarization wave propagates toward the right side, and is transmitted through the polarization splitter 2140a, so that the air floating video 220 is displayed

In this case, in the present embodiment, the optical element 2150 having the function of enlarging the air floating video 220 is arranged between the retroreflection optical member 2 and the air floating video 220 (the virtual plane where the enlarged image 1301 is formed). By this optical element 2150, the air floating video 220 is enlarged to have the desirable size. At the position of the virtual plane, the enlarged image 1301 is displayed as the air floating video 220. In the present embodiment, the display apparatus 1 is configured to be movable in the right and left direction of the drawing (that is the direction of the optical axis). By the movement of the display apparatus 1 in the right and left direction, the light path length of the video light (the optical distance between the display apparatus 1 and the retroreflection optical member 2) is changed, and therefore, the imaging position of the air floating video 220 can be changed. For example, movement of the display apparatus 1 in the left direction provides a virtual plane 1302 after the change. And, when the video luminous flux is spread by the optical element 2150 arranged in the middle of the light path, the enlarged air image depending on the desirable imaging position can be provided. Alternatively, a structure in which the position of the retroreflection optical member 2 is movable in the right and left direction of the drawing may be adopted, and provides the same effect

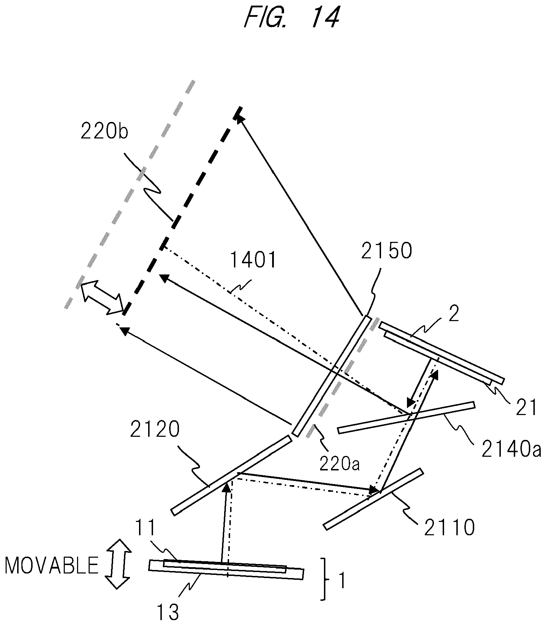

FIG. 14 shows a second embodiment for increasing the degree of freedom in the display position and the enlarging magnification of the air floating video. FIG. 14 shows the structure of the air floating video display apparatus using the retroreflection optical member 2. The display apparatus 1 that is the video source is made of the liquid crystal display panel 11 and the light source 13 functioning as the image display apparatus. From the liquid crystal display panel 11, the video light of the specific polarization wave is emitted. In this case, in order to reduce the ghost image formed by the retroreflection optical member 2 as described above, a light source 13 having a narrow divergence angle as the divergence angle of the video light may be selected. As a result, the video light emitted upward from the display apparatus 1 is reflected by a reflection mirror 2120 and a reflection mirror 2110 without spreading. The video light of the specific polarization wave reflected by the reflection mirror 2110 propagates toward a polarization splitter 2140a on the upper side. The video light is first transmitted through the polarization splitter 2140a, and then, is made incident and reflected on the retroreflection optical member 2 on the upper side or others. The λ/4 plate 21 is arranged on the surface of the retroreflection optical member 2. The video light of the specific polarization wave emitted from the polarization splitter 2140a is reflected by the reflection surface of the retroreflection optical member 2 as well as being converted in terms of polarization by the λ/4 plate 21. The converted video light of the other polarization wave is reflected by the polarization splitter 2140a, and propagates obliquely upward, so that the air floating video is displayed as the enlarged video 220b through the optical element 2150.

In the second embodiment of FIG. 14, the case of the arrangement of two reflection mirrors (2120 and 2110) as the reflection mirror (reflection optical element) has been described. However, the invention is not limited to this. At least one reflection mirror may be arranged as the reflection mirror in the light path connecting the imaging position of the air floating video and the polarization splitter 2. In the second embodiment, the degree of freedom in the shape and the placement of the air floating video display apparatus can be increased by the increase in the number of the reflection mirrors to increase the number of turns of the light path. In this case, the center of the optical function of the optical element 2150 (such as the center of the Fresnel lens) having the function of enlarging the air floating video is eccentric from an optical axis 1401 illustrated with a dashed dotted line to be arranged between the retroreflection optical member 2 and the air floating video (the virtual plane where the enlarged image 220b is formed). As a result, the air floating video having the different magnification with respect to the optical axis can be enlarged to have the desirable size. In the structure of the second embodiment, as similar to the first embodiment, the position of the display apparatus 1 is movable in the up and down direction in the drawing (that is the direction of the optical axis). By the movement of the display apparatus 1 in the up and down direction, the imaging position of the air floating video can be changed in the direction of the video light corresponding to the optical axis 1401. By spreading of the video luminous flux by the optical element 2150 eccentric from the optical axis 1401, the enlarged air image eccentric in the up and down direction of the screen can be provided depending on the imaging position.

Of the reflection mirrors, the reflection mirror (that is the reflection mirror 2110 in the present embodiment) closest in the light path to the imaging position of the air floating video is preferably made of a metal multilayered film that reflects the video light of one polarization wave but transmits the video light of the other polarization wave.

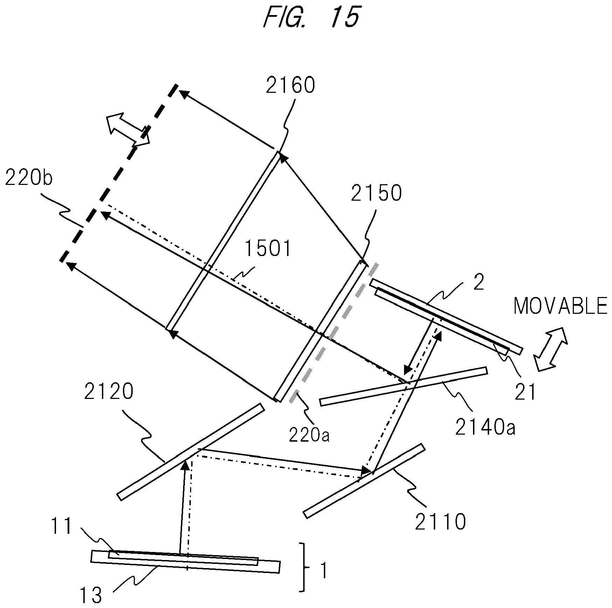

FIG. 15 similarly shows a third embodiment for increasing the degree of freedom in the display position and the enlarging magnification of the air floating video. FIG. 15 shows a structure of an air floating video display apparatus using the retroreflection optical member 2. The display apparatus 1 that is the video source is made of the liquid crystal display panel 11 and the light source 13. From the liquid crystal display panel 11, the video light of the specific polarization wave is emitted. In this case, in order to reduce the ghost image formed by the retroreflection optical member 2 as described above, a light source 13 having a narrow divergence angle as the divergence angle of the video light may be selected. As a result, the video light is reflected by the reflection mirror 2120 and the reflection mirror 2110 without spreading, is transmitted through the polarization splitter 2140a, and then, is made incident on the retroreflection optical member 2 or others. The λ/4 plate 21 is arranged on the surface of the retroreflection optical member 2. The video light of the specific polarization wave emitted from the polarization splitter 2140a is reflected by the reflection surface of the retroreflection optical member 2 as well as being converted in terms of polarization by the λ/4 plate 21. The converted video light of the other polarization wave is reflected by the polarization splitter 2140a, and propagates obliquely upward, so that the air floating video is displayed as the enlarged image 220b through the optical element 2150. Even in the third embodiment of FIG. 15, the degree of freedom in the shape and the placement of the air floating video display apparatus can be similarly increased by the increase in the number of the reflection mirrors to increase the number of turns of the light path.

In this case, the center of the optical function of the optical element 2150 (such as the center of the Fresnel lens) having the function of enlarging the air floating video is eccentric firm an optical axis 1501 illustrated with a dashed dotted line to be arranged between the retroreflection optical member 2 and the air floating video (the virtual plane where the enlarged image 220b is formed). A difference of the third embodiment of FIG. 15 from the second embodiment is that a second optical element 2160 is arranged between the first optical element 2150 that is the optical element 2150 and the air floating video (the virtual plane). A function of this second optical element 2160 is as explained in detail as the second optical element 2160 in the fifth embodiment shown in FIG. 9. In the third embodiment, the center of the optical function of the first optical element 2150 is eccentric from the center of the outer shape, and therefore, the center of the enlargement of the air floating video is arranged at a position different from that of the optical axis 1501 as shown in FIG. 15, and the air floating video having the different planar (two-dimensional) magnification can be enlarged to have the desirable size.

In the structure of the third embodiment, the retroreflection optical member 2 is movable in the up and down direction of the drawing (that is the oblique direction). By the movement of the position of the retroreflection optical member 2 in the up and down direction (that is the oblique direction), the imaging position of the air floating video can be changed. By spreading of the video luminous flux by the optical element 2150 eccentric from the optical axis 1501, the enlarged air image eccentric in the up and down direction of the screen can be provided depending on the imaging position.

### <Merit of Enlargement of Air Floating Video>

A merit of the enlargement of the air floating video will be explained with reference to FIG. 7 showing the configuration of the air floating video display apparatus using the retroreflection optical member 2. In FIG. 7, the video luminous flux emitted from the display apparatus 1 that is the video source is reflected by the retroreflection optical member 2, is transmitted through the transparent member 100 separating the air floating video display apparatus itself from the outside, and then, provides the enlarged air floating videos 220 (220b1 and 220b2). In FIG. 7, note that the transparent member 100 may share the configuration with the optical element 2150, in other words, may be unified therewith.

Therefore, in the configuration of FIG. 7, at the time of the display of the enlarged air floating videos, when the viewing person views the enlarged air floating videos 220 (220b1 and 220b2) from the upper side of the drawing toward the lower side of the same, the viewing person does not directly view the retroreflection optical member 2 through the transparent member 100. The surface of the retroreflection optical member 2 is made of a polyhedron of a reflection surface of a mirror surface (see FIG. 2). The incidence of the external light forms the ghost image and the diverged light, and deteriorates the video quality and the quality of the apparatus itself. Therefore, the opening (such as the portion where the transparent member 100 is arranged) in the air floating video display apparatus is preferably as small as possible. For this, an enlarging magnification of the optical element 2150 is preferably large. Through experiments, the inventors have obtained a necessary luminance of the air floating video for suppressing the deterioration of the video quality due to the external light to a level without any problem in practice. As a result, it has been found that a luminance that is 10 or more times brightness (luminance) of periphery of the apparatus is necessary, and 1000 (nt) or more is the level without any problem in practice, and a luminance of 3000 (nt) that is 30 times that is necessary in order to provide more favorable video quality. Similarly, in order to provide the sufficient air floating texture in the case of the oblique viewing of the air floating video, a luminance that is 100 or more times that of the external reflection of the apparatus itself is necessary, and therefore, an exterior (that is a not-illustrated structure in which the optical members and others are embedded) of the apparatus desirably has a black-based color absorbing the light

### <Technical Means for Providing Three-Dimensional Air Floating Video>

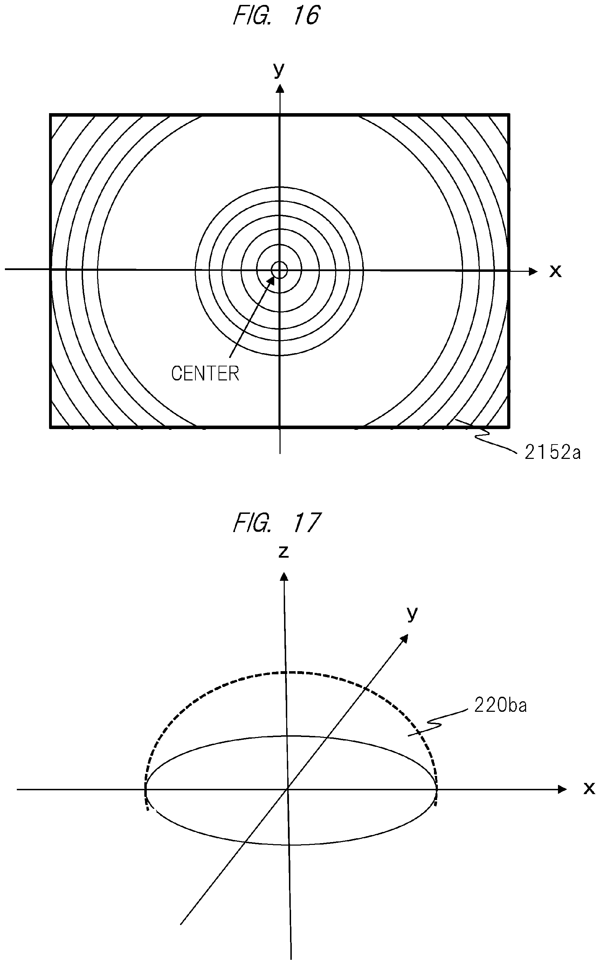

Regarding the technical means for increasing the degree of freedom in the design for the display position and the enlarging magnification of the air floating video, the Fresnel lens as the optical element 2150 enlarging the air floating video has been explained. The original function of the optical element 2150 of the present embodiment is a function of bending the video luminous flux in the desirable direction, the video luminous flux being emitted from each pixel of the liquid crystal display panel 11 serving as the video display element configuring the display apparatus 1 that is the video source. Therefore, the emitting surface of the optical element 2150 is provided with a bending surface corresponding to a position that the video luminous flux emitted from each pixel reaches after being bent on the entering surface. Therefore, ideally, a shape of connected polyhedrons may be configured. However, the case of the polyhedron shape needs a very long period of time for process of dye molding. Therefore, for practical realization, the shape of the emitting surface may be provided by determining the coordinates in plane in consideration of the tilt of adjacent surfaces based on, for example, a freeform surface equation. Further, when a concentric circle Fresnel shape 2152a as shown in FIG. 16 is used as the shape in order to reduce the time for the process of dye molding, the processability is further improved.

FIG. 17 is an explanatory diagram showing a principle for why an air floating video 220ba formed by the function of the optical element 2150 shown in FIG. 16 is three-dimensionally viewed As the method for providing the air floating video, (1) the retroreflection method capable of optionally determining the video floating amount by the structure of the optical system and (2) the micro lens method of unambiguously determining it by the focal length of the micro lens are exemplified. The retroreflection method will be exemplarily explained below for simplification of the explanation.

The optical element 2150 in the retroreflection method has a function of directing the pixel of the air floating video corresponding to each pixel of the liquid crystal display panel 11 toward the desirable position. This function has been described in detail with reference to FIG. 20. The optical element 2150 is arranged between the liquid crystal display panel 11 that is the video source and the air floating video 220 (virtual plane) as shown in FIG. 20 and others, and controls the imaging positions of the pixels (illustrated with a broken line) of the air floating video 220 on the X-Y plane corresponding to the matrix pixels (illustrated with a solid line) of the liquid crystal display panel 11 in FIG. 20. On the other hand, the imaging position in the Z axis direction is unambiguously determined by the distance L between the retroreflection optical member 2 and the liquid crystal display panel 11, and therefore, the image is formed at the predetermined position after the reflection by the retroreflection optical member 2. As a result, at the center of the screen, the image is formed at the position farthest from the reference plane (that is the x-y plane of FIG. 17). In a point far firm the center of the screen, the imaging position is close to the reference plane. Therefore, as shown in FIG. 17, connection of the imaging positions of the air floating video forms a semispherical shape (its cross section is semicircular), and thus, the air floating video 220 can be virtually formed as the three-dimensional video (three-dimensional air floating video 220ba) even under the planar video information displayed on the liquid crystal display panel 11 that is the video source.

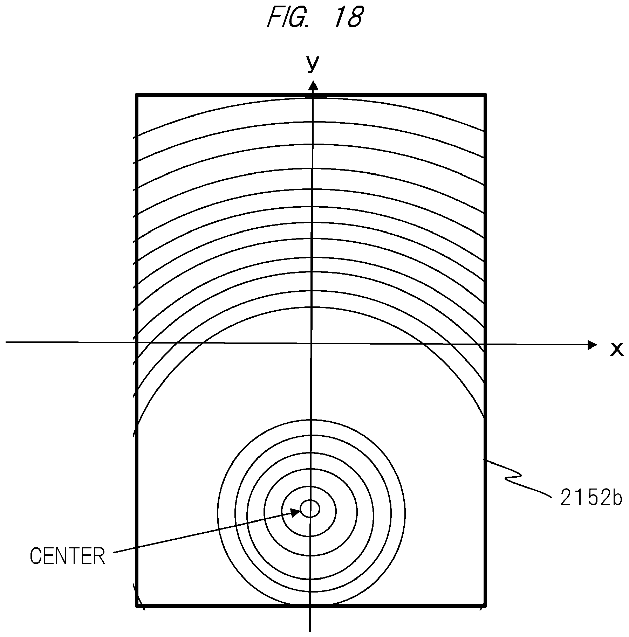

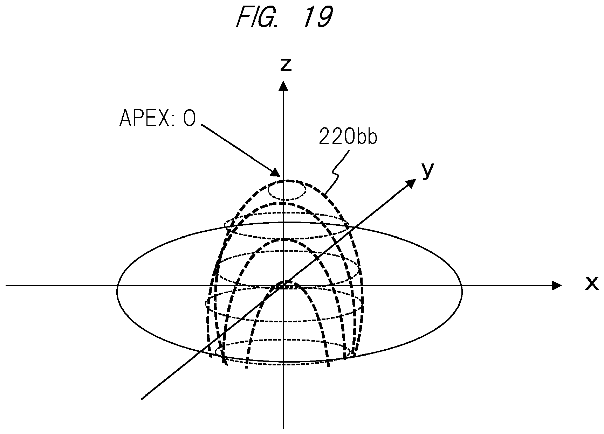

FIG. 18 shows that the optical center of the optical element 2150 (that is the center of the Fresnel lens) is eccentric. In this case, an apex "O" (screen center) of the resultant virtual three-dimensional image is formed at the position farthest from the reference plane (that is the x-y plane of FIG. 19), and the imaging position in a point far from the screen center is close to the reference plane as shown in FIG. 19, and therefore, connection of the imaging positions of the air floating video forms a spheroid shape. Even under the planar video information displayed on the liquid crystal display panel 11 that is the video source, the air floating video can be virtually formed as the three-dimensional video (three-dimensional air floating video 220bb). As described above, in the embodiment shown in FIG. 15, the virtual three-dimensional video resulted from the eccentric shift of the optical element 2150 can be formed to be eccentric in the screen. In this case, the imaging position of the retroreflection video determined by the distance between the retroreflection optical member 2 and the liquid crystal display panel 11 is unambiguously determined by the function of the optical element 2150.

Further, in another technical means for forming the air floating video, also in the micro lens array method of forming the air video by the micro lens array corresponding to each pixel of the display apparatus 1 that is the video source, the imaging position for each pixel is similarly controlled by the optimization of the unique focal length of the micro lens. In addition, by the above-described function of the optical element 2150, the imaging position and the shape of air floating video are controlled to provide the desirable air floating video. In the foregoing, the optical element 2150 has been explained based on the divergent function for the simplification of the explanation. However, so-called free curved lens shape also partially having a lens shape with a light collection function may be adopted depending on the desirable shape.

### <Air Floating Video Display Apparatus for In-Vehicle Purpose>

FIG. 33 is a schematic configuration diagram for explaining superiority of using the air floating video display apparatus providing the air floating video or the virtual three-dimensional air floating video 220 of the present invention for in-vehicle purpose. As an example of this case, an air floating video display apparatus 1000 configured to provide the enlarged air floating video without using a windshield 6 of an automobile will particularly be explained here. The air floating video display apparatus 1000 provides the air floating video 220 that is the enlarged air floating video in an interior space of a subject vehicle (host/own vehicle) at an eye point 8 (which will be detailed later) corresponding to a driver's line of sight This provides a visual effect similar to virtually forming a virtual video V1 that is an enlarged virtual video in front of the subject vehicle. Through experiments, the inventors have verified that this configuration can also virtually provide the three-dimensional video because of the shape of the optical element 2150, and therefore, can provide the depth texture in the displayed air video in combination with the video processing. An example of the display of the virtual three-dimensional air floating video will be exemplarily described in detail below.

As shown in FIG. 33, when the air floating video 220 is viewed at the eye point 8, the virtual three-dimensional air floating video 220 (the corresponding virtual video V1) can be overlaid, by the above-described technical means, on an actual view visually recognized by a driver as similar to a case of viewing of the virtual video V1 reflected by a projected member (that is an inner surface of the windshield 6 in the present embodiment, a surface facing the driver in the vehicle) in the related-art head up display (HUD). Information displayed as the virtual three-dimensional air floating video (also referred to as three-dimensional air video) 220 includes, for example, the vehicle information, information of front view captured by a camera (not illustrated) such as a monitor camera or an around viewing person, and/or information of scenery around the vehicle before start, a speedometer, an engine tachometer, a remaining energy level display and the like, and besides, a safety driving assistance system based on video information and audio information such as attention alert (not illustrated) using display of a character icon and voice around the screen.

In addition, in the present embodiment, the air floating video display apparatus 1000 includes: the display apparatus 1 configured to display the three-dimensional video corresponding to the information onto a plane to project the corresponding video light; and a retroreflection optical member 2100 (namely a retroreflection optical element) configured to reflect the video displayed on the display apparatus 1 to form the three-dimensional air floating video 220. The display apparatus 1 has a spatially movable structure (illustrated as being movable in the right and left direction in the drawing). By the movement of the display apparatus 1 in the right and left direction, a forming position of the three-dimensional air floating video 220 can be moved in an obliquely up and down direction (schematically up and down direction) along the optical axis 3301 passing through the optical element 2150. Consequently, a depression angle θe related to the virtual video V1 changes when the forming position of the three-dimensional air floating video 220 viewed by the driver through an eye box (which refers to a predetermined space containing the eye point 8) moves in the up and down direction. This provides an effect equivalent to changing the display position of the virtual video in the related-art HUD. In addition, by detecting movement of the driver's line of sight (the eye point 8) while using, for example, a monitor camera (not illustrated) in the vehicle, the display position of this three-dimensional air floating video 220 can also be moved in the up and down direction and right and left direction in accordance with this movement of the line of sight.

In the present embodiment, the forming position of the three-dimensional air floating video 220 is set at a higher position than an upper surface (not illustrated) of a dashboard (see FIG. 34 described later) of the vehicle. Therefore, in the configuration of the present embodiment, an optical distance from the display apparatus 1 to the retroreflection optical member 2100 is increased by causing the reflection mirror (namely a turning mirror) 2110 arranged in the light path between the display apparatus 1 and the retroreflection optical member 2100 to downwardly turn the video light emitted from the display apparatus 1 once. By this configuration, the position of the three-dimensional air floating video 220 provided after being reflected by the retroreflection optical member 2100 can be set at a higher position in the oblique up and down direction in the drawing so as to correspond to the virtual video V1 at a distant position as viewed from the driver.

### <First Specific Example of Air Floating Video Display Apparatus providing Air Floating Video>

With reference to FIG. 33, an embodiment of the air floating video display apparatus for in-vehicle purpose of the invention of the present application will be described. In this embodiment, the air floating video display apparatus 1000 is built as the HUD in a dashboard (as similar to FIG. 34). The air floating video display apparatus 1000 includes the display apparatus 1, the retroreflection optical member 2100, and the like. Regarding the video displayed on the display apparatus 1, shade of the display video may be emphatically displayed in order to emphasize the depth direction. The liquid crystal display panel 11 configured to modulate light supplied from the light source 13 in accordance with a video signal and emit the light as the light of the specific polarization wave is used as the video display element.

A video image of a specific polarization wave that is S-polarization wave in the present example (illustrated with a solid line) modulated by this liquid crystal display panel 11 is transmitted through a beam splitter (or reflection-type light polarizer) 2140 configured to transmit S-polarization light but reflect P-polarization light, and enters the reflection mirror 2110. The video light having been reflected downward by the reflection mirror 2110 is reflected by the retroreflection optical member 2100 or others arranged near a bottom surface of the air floating video display apparatus 1000, and forms the air floating video 220. The λ/4 plate is arranged on a video light entering surface of the retroreflection optical member 2100. The S-polarization video light is converted to the P-polarization light (illustrated with a broken line) when being transmitted through the λ/4 plate twice after entering and then being reflected by the retroreflection optical member 2100. The light path of the P-polarization video light is reflected again by the reflection mirror 2110 to turn back, and the P-polarization video light is reflected upward by the beam splitter 2140. This reflected P-polarization video light is reflected obliquely upward by the reflection optical element (reflection mirror) 2120 arranged on the upper side of the air floating video display apparatus 1000, and provides the air floating video or the virtual three-dimensional air floating video 220 because of the function of the optical element 2150.

If the transmitting surface shape of the optical element 2150 is shaped to, for example, a concave shape (that is a shape having a function of diverging the light ray) concaved toward the driver if needed, the video luminous flux forming the air floating video 220 is diverged, and therefore, is spread on the image forming surface, and besides, the image forming point of the resultant air floating video 220 is curved closer to the front side in the peripheral portion than the screen center, and therefore, an air video virtually having the information of the depth direction is provided in viewing from the driver side. In this case, as described above, the shade may be emphatically displayed in the display apparatus 1 in order to emphasize the depth direction. Further, in a case of human or others for the display video, addition of a shade portion emphasizes the three-dimensional video, and therefore, is preferable. As described above, by the air floating video display apparatus 1000 for in-vehicle purpose of the present embodiment, the air floating video or the three-dimensional air floating video 220 can be formed, and the driver can visually recognize the virtual video V1 corresponding to this video.

This video light having been emitted from the optical element 2150 is emitted outward through an opening portion 41 arranged in the dashboard 48 as shown in FIG. 34, so that the air floating video or the three-dimensional air floating video 220 can be formed at an illustrated position (a position being inside the vehicle as well as being in front of the windshield 6). Return to FIG. 33. The imaging position of the resultant air floating video or three-dimensional air floating video 220 in this case is formed on a line segment connecting the optical element 2150 and the eye point 8, and the image is formed to be upper than an upper end of the optical element 2150. In this manner, the three-dimensional video image can be overlaid as an actual image on an actual scenery viewed by the driver during driving as similar to the related-art AR HUD. At this time, in the present embodiment, the windshield (front glass 6) is not used as the optical system as different from the related-art HUD, and therefore, the air floating video display apparatus is unsusceptible to variations in the curvature radius and/or tilt of the windshield due to the automobile design, and is excellent in applicability to different automobile models.

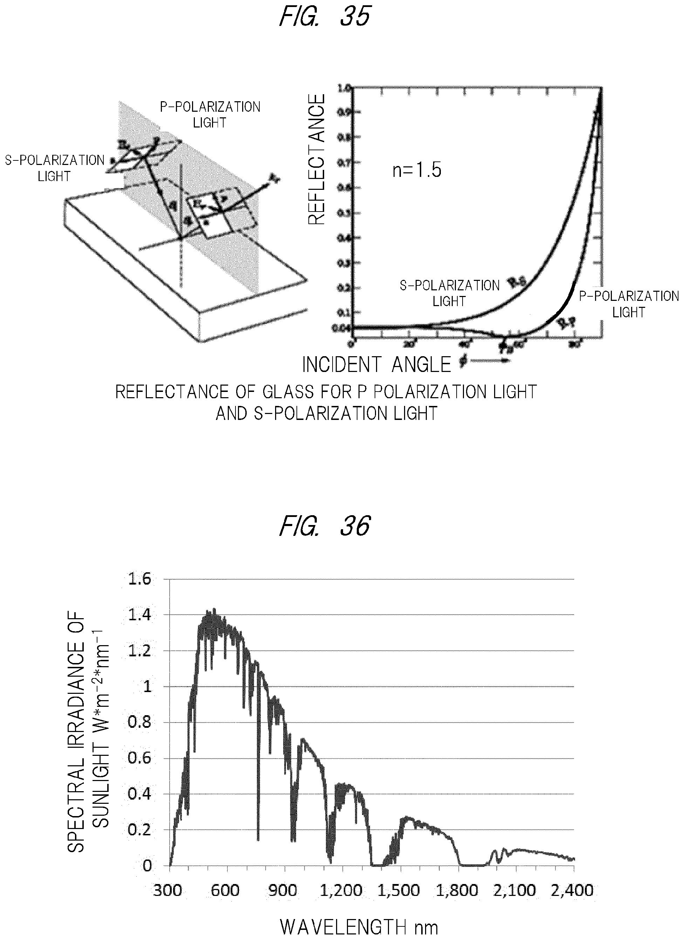

A reflection film resulted from depositing a metal reflection film by a coating method or a stepper method, a beam splitter configured to selectively reflect a specific polarization wave, or a reflection-type light polarizer can be used as the reflection optical element 2120. Thus, the reflection optical element 2120 has the following function. When the incident angle of components of external light such as sunlight entering through the windshield 6 is large, the reflectance of the S-polarization light is high as shown in FIG. 35. Therefore, a P-polarization component enters the vehicle. The reflection optical element 2120 selectively reflects this P-polarization component Therefore, no external light enters optical components (the display apparatus 1, the beam splitter 2140, the retroreflection optical member 2100 and the like as each component within a structure of the air floating video display apparatus 1000) at a stage behind (below in the drawing) the reflection optical element 2120. Thus, the reliability of the optical components, the display apparatus 1 and a polarization plate (not illustrated) arranged at a video light emission side of the liquid crystal display panel 11, and/or the like, is not degraded.

Furthermore, it is further preferred that the reflection optical element 2120 has the property of reflecting ultraviolet ray and light having a wavelength of 800 nm or more contributing to temperature increase among spectral irradiant energy of sunlight shown in FIG. 36. In addition, also in this embodiment, the forming position of the air floating video 220 can be moved in the oblique up and down direction by employing a structure that enables the display apparatus1 to be moved in the right and left direction in the drawing (that is the direction of the optical axis). Consequently, the depression angle of the air floating video 220 (corresponding virtual video V1) as viewed at the eye point 8 of the driver changes, and therefore, the video display distance and size of the air floating video 220 can be virtually changed relative to the actual scenery visually recognized by the driver. Furthermore, also in this embodiment, a camera (not illustrated) for sensing the line of sight of the driver may be arranged to track/detect the line of sight of the driver to move the display position of the air floating video 220 in cooperation with the line-of-sight position. In addition, the video image displayed as the air floating video 220 at this time may be used as alert information or the like matched with the actual scenery viewed by the driver to cause the attention alert during driving.

### <Second Specific Example of Air Floating Video Display Apparatus providing Air Floating Video>

With reference to FIG. 34, a second example of the air floating video display apparatus for in-vehicle purpose of the invention of the present application will be described below. As similar to the first example, the liquid crystal display panel 11 configured to modulate light supplied from the light source 13 in accordance with a video signal and emit the light as the light of the specific polarization wave is used as the display apparatus configuring the display apparatus 1 in the second example. A video image of a specific polarization wave (here S-polarization wave) modulated by this liquid crystal display panel 11 is transmitted through a beam splitter (or reflection-type light polarizer) 2140 configured to transmit S-polarization light but reflect P-polarization light, is reflected by the retroreflection optical member 2100, and forms the air floating video 220. A λ/4 plate is arranged on a video light entering surface of the retroreflection optical member 2100. The S-polarization video light is converted to the P-polarization light when being transmitted through the λ/4 plate twice after entering and then being reflected by the retroreflection optical member 2100. The P-polarization video light is reflected by the beam splitter (or reflection-type light polarizer) 2140, and is reflected by a reflection mirror (reflection optical element) 2120 arranged on the upper side of the air floating video display apparatus 1000. The reflection light displays the air floating video 220 in the oblique up direction through the optical element 2150.

If the surface shape of the optical element 2150 is shaped to, for example, a concave shape (that is a shape having a function of diverging the light ray) concaved toward the driver if needed, the video luminous flux forming the air floating video is diverged, and therefore, is spread on the image forming surface, and besides, the image forming point is curved closer to the front side in the peripheral portion than the screen center, and therefore, an air video virtually having the information of the depth direction is provided in viewing from the driver side. In this case, as described above, the shade may be emphatically displayed in the display apparatus 1 in order to emphasize the depth direction. Further, in a case of human or others for the display video, addition of a shade portion emphasizes the three-dimensional video.

The video light forming the air floating video 220 is emitted through the opening portion 41 arranged in the dashboard 48 of the vehicle. In this manner, the air floating video 220 can be formed at a predetermined position. And, it is better to use the optical element 2150 as a window fitted with the shape of the opening portion 41 for transmitting the video luminous flux since the number of components can be reduced. In this case, an imaging position of the resultant air floating video 220 is formed on a line segment connecting the retroreflection optical member 2100, the optical element 2150 and the eye point 8, and the image is formed to be upper than the upper end of the optical element 2150. In this manner, the video image can be overlaid as an actual image on a part of an actual scenery viewed by the driver during driving as similar to the related-art HUD. At this time, the windshield (front glass 6) is not used as the optical system as different from the related-art HUD, and therefore, the air floating video display apparatus 1000 is unsusceptible to variations in the curvature radius and/or tilt of the windshield due to the automobile design, and is excellent in applicability to different automobile models.

It is preferable to arrange an anti-reflection film or an absorbing-type light polarizer on the video-light entering surface of the transparent member of the opening portion 41.

The video displayed on the liquid crystal display panel 11 is preferably a video resulted from correcting image distortion caused in the optical system forming the air floating video 220. The controller 40 (FIG. 33) performs an image processing or others to create the video so that the video displayed on the liquid crystal display panel 11 is the video resulted from correcting the image distortion.

As the reflection optical element (reflection mirror) 2120, a reflection mirror similar to one in the first example can be used. The reflection mirror 2120 selectively reflects the P-polarization component having entered the vehicle as described above. Therefore, no external light enters optical components at the stage behind the reflection optical element 2120. Thus, the reliability of the optical components, the liquid crystal display apparatus 11 and/or the like is not degraded. In addition, as similar to the example, the display apparatus 1 (or the retroreflection optical member 2100) is structured to be movable in the right and left direction in the drawing (the direction of the optical axis, the direction perpendicular to the video display surface). In this manner, in the present embodiment, the forming position of the air floating video or the three-dimensional air floating video 220 can be moved in the oblique up and down direction along the optical axis 3401 passing through the optical element 2150. Consequently, the depression angle of the air floating video 220 (corresponding virtual video) as viewed at the eye point 8 of the driver changes, and therefore, the video display distance and size of the air floating video or the virtual three-dimensional air floating video 220 can be changed relative to the actual scenery visually recognized by the driver.

According to the embodiments described above, high-resolution video or three-dimensional video can be displayed as the air floating video 220 as viewed to be aerially floating on, for example, an extension line of the opening portion 41 on the dashboard 48 (on the optical axis 3401 passing through the optical element 2150). At this time, the embodiment is configured so that the video light emitted through the opening portion 41 of the air floating video display apparatus 1000 has a small divergence angle, namely acute angle, and besides, has the uniform specific polarization wave. Thus, only normal reflected light can be efficiently reflected for the retroreflection optical member 2100. Therefore, according to the embodiment, the light use efficiency is high, the ghost image being the problem in the related art retroreflection method can be suppressed, and a clear air floating video can be provided. In addition, a configuration including a light source (the light source 13) of the present embodiment can provide a novel air floating video display apparatus capable of significantly reducing power consumption and having excellent applicability. In addition, as described above, this can provide an in-vehicle air floating video display apparatus capable of displaying so-called unidirectional enlarged air floating video or three-dimensional air floating video that can be visually recognized inside or outside the vehicle via the windshield 6 of the vehicle.

In the above-described embodiments, the optical element 2150 having the function of diverging the video luminous flux for enlarging the air floating video has been explained. However, in replace of this optical element 2150, the reflection mirror (reflection optical element) 2120 may be configured to have the same function as that of the optical element 2150. In other words, the reflection optical element 2120 and the optical element 2150 may be configured to be a unified element. However, when an optical element having the enlarging function is arranged inside the structure of the air floating video display apparatus 1000, it is necessary to increase an area of the opening window 41, and therefore, a possibility of the entering of the external light into the air floating video display apparatus is made high, and reliability of the component and the video image quality decrease, and therefore, consideration in design is necessary.

### <Reflection-type Light Polarizer>

When a reflection-type light polarizer having a grid structure is used as the beam splitter 2140 in the present embodiment, the property of this reflection-type light polarizer for the light in the direction vertical to the light polarization axis decreases. Therefore, this reflection-type light polarizer is desirably used along the light polarization axis, and the light source 13 of the present embodiment capable of emitting the video light at the narrow angle firm the liquid crystal display panel 11 is an ideal light source. For the oblique light, the property in the horizontal direction similarly decreases. In consideration of the above-described properties, an embodiment using the light source (light source 13) capable of emitting the video light at the narrow angle firm the liquid crystal display panel 11 as a backlight of the liquid crystal display panel 11 will be explained below. In this manner, the high-contrast air floating video can be provided.

### <Display Apparatus>

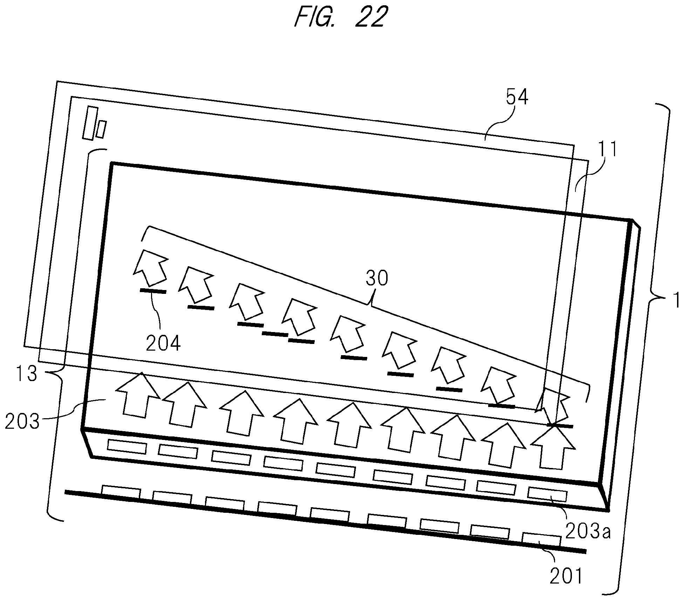

The display apparatus 1 of the present embodiment will be explained with reference to FIG. 22 and others. The display apparatus 1 of the present embodiment includes the liquid crystal display panel 11 that is the video display component and the light source 13 configuring the light source of the liquid crystal display panel 11. FIG. 22 shows the light source 13 together with the liquid crystal display panel 11 in an exploded transparent view.

As illustrated with an arrow (emitted luminous flux) 30 in FIG. 22, from the light emitted from the light source 13 that is the backlight apparatus, this liquid crystal display panel 11 that is the video display component provides the illumination luminous flux having the property similar to the laser beam having the narrow-angle divergence property meaning the intense directionality (in other words, the rectilinear propagation) and having the unidirectionally-unified light polarization surface, and emits the video light modulated in accordance with the input video signal. Then, the video light is reflected by the retroreflection optical member 2 and is transmitted through the windshield (front glass), and forms the air floating video that is the actual image. The display apparatus 1 of the present embodiment in FIG. 22 is configured to include the liquid crystal display panel 11, a light-direction converting panel 54 for controlling the directionality of the luminous flux emitted from the light source 13, and a narrow-angle divergence plate (not illustrated) as necessary. In other words, the light polarizer is arranged on both surfaces of the liquid crystal display panel 11 to adjust the light intensity of the video light of the specific polarization wave in accordance with the video signal, and the light is emitted as illustrated with an arrow (emitted luminous flux) 30. In this manner, in the display apparatus 1 of the present embodiment, a desirable video is projected as the light of the specific polarization wave having the high directionality (rectilinear propagation) to the retroreflection optical member 2 through the light-direction converting panel 54, and is reflected by the retroreflection optical member 2, and then, is transmitted toward eyes of the viewing person inside/outside the vehicle space, and forms the air floating video. Note that a protection cover may be arranged on a surface of the light-direction converting panel 54.

In the present embodiment, in order to improve the use efficiency of the luminous flux 30 emitted from the light source 13 to significantly reduce the power consumption, the display apparatus 1 including the light source 13 and the liquid crystal display panel 11 can be configured as follows. Specifically, in the display apparatus 1, the light (emitted luminous flux 30) emitted from the light source 13 can be projected toward the retroreflection optical member 2, and can be reflected by the retroreflection optical member 2, and then, the directionality can be controlled to form the air floating video at the desirable position by using a transparent sheet (not illustrated) arranged on the surface of the windshield. Specifically, in this transparent sheet, the imaging position of the air floating video is controlled with the high directionality by an optical component such as a Fresnel lens and a linear Fresnel lens. In this manner, the video light emitted from the display apparatus 1 and having the high directionality (rectilinear propagation) such as laser beam efficiently reaches the viewing person outside the windshield (such as on the sidewalk/pavement). As a result, the high-quality air floating video with the high resolution can be displayed, and the power consumption of the display apparatus 1 including the LED element 201 of the light source 13 can be significantly reduced.

### <First Example of Display Apparatus>

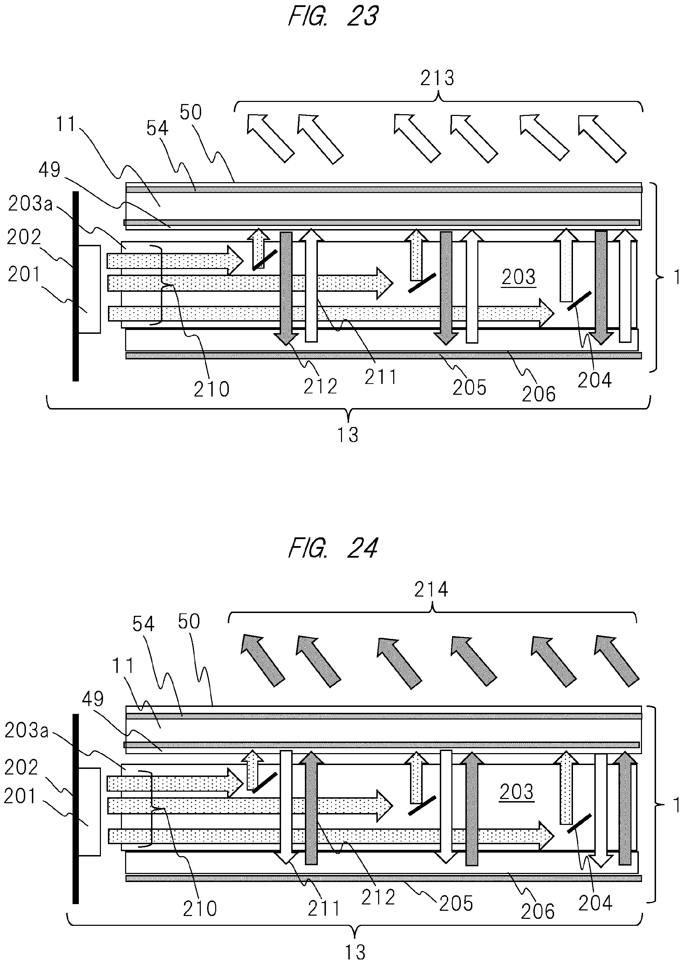

FIG. 23 shows an example of a specific configuration of the display apparatus 1. In FIG. 23, the liquid crystal display panel 11 and the light-direction converting panel 54 are arranged above the light source 13 of FIG. 22. This light source 13 made of for example, plastic or others is configured to house the LED element 201 and a light guiding body 203 therein. In order to convert the divergence light emitted from each LED element 201 to be substantially collimated luminous flux, an end surface of the light guiding body 203 has a cross-sectional area gradually increasing toward a surface facing the light receiver to form a lens shape having a function of making the divergence angle gradually small through a plurality of total reflections in internal propagation. The liquid crystal display panel 11 is attached onto an upper surface of the light guiding body 203. The LED element 201 that is a semiconductor light source and an LED board 202 on which a control circuit for the LED element 201 is mounted may be attached to one side surface (in this example, a left end surface) of the case of the light source 13. Also, a heat sink that is a member for cooling the heat generated in the LED element 201 and the control circuit may be attached to an outer surface of the LED board 202.

To a frame (not illustrated) of the liquid crystal display panel 11 attached to an upper surface of the case of the light source 13, the liquid crystal display panel 11 attached to this frame, a FPC (Flexible Printed Circuits not illustrated) electrically connected to this liquid crystal display panel 11 and others are attached. In other words, the liquid crystal display panel 11 that is the liquid crystal display component generates the display video in corporation with the LED element 201 that is a solid light source by modulating an intensity of the transmission light on the basis of a control signal output from a control circuit (not illustrated) configuring the electronic device. In this case, the generated video light has the narrow divergence angle, and is made of only the specific polarization wave component, and therefore, a novel video display apparatus that is approximately a surface emission laser video source driven based on the video signal and that is different from the related art can be provided. Currently, note that it is technically and safely impossible to provide a laser apparatus to form the laser luminous flux having the same size as that of the image provided by the display apparatus 1. Accordingly, in the present embodiment, the light that is approximately the surface emission laser video light is formed from the luminous flux emitted from, for example, a general light source including an LED element

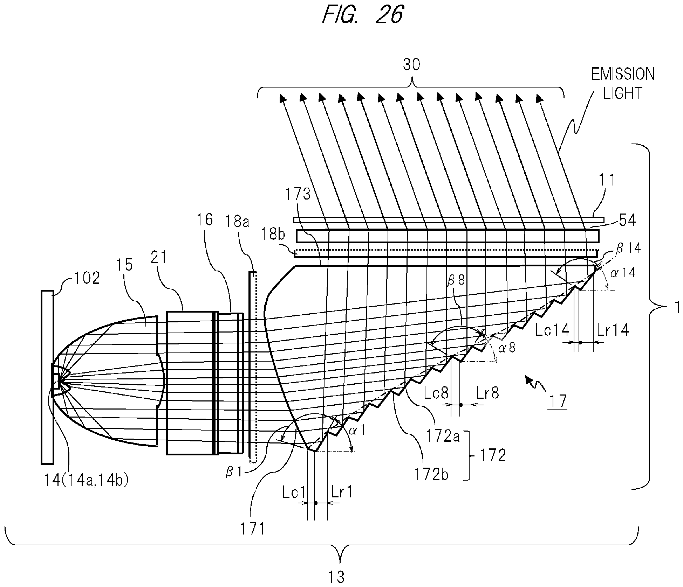

Subsequently, a configuration of the optical system housed in the case of the light source 13 will be explained in detail with reference to FIG. 24 in addition to FIG. 23. Since each of FIGs. 23 and 24 is a cross-sectional view, only one of a plurality of LED elements 201 configuring the light source is illustrated. Light from the plurality of LED elements 201 is converted to substantially collimated light by a shape of a light receiving end surface 203a of the light guiding body 203. Therefore, the light receiver and the LED element 201 on the end surface of the light guiding body 203 are attached so as to keep a predetermined positional relation. Note that each light guiding body 203 is made of for example, a light-transmittable resin such as acrylic resin. The LED light receiving surface of the end of the light guiding body 203 has, for example, a conically convex outer circumferential surface formed by rotation of a paraboloid cross section, an apex of the outer circumferential surface has a concave portion with a convex portion (in other words, a convex lens surface) at center of the apex, and center of a plane portion of the light receiving end surface 203a of the light guiding body 203 has a convex lens surface that protrudes outward (or may be a concave lens surface that is recessed inward) (as the same as FIG. 26 and others described later). Note that the outer shape of the light receiver of the light guiding body 203 to which the LED element 201 is attached is the paraboloid shape forming the conically-shaped outer circumferential surface, and is set within a range of an angle allowing the light peripherally emitted from the LED element 201 to be totally reflected inside the outer circumferential surface, or forms the reflection surface.

Meanwhile, the LED element 201 is arranged at each of predetermined positions on the surface of the LED board 202 that is its circuit board. The LED board 202 is arranged and fixed so that each LED element 201 on its surface is positioned at center of the concave portion to correspond to the light receiving end surface 203a as the LED collimator. In such a configuration, the light emitted from the LED element 201 can be extracted to be the substantially collimated light by the shape of the light receiving end surface 203a of the light guiding body 203, and the use efficiency of the generated light can be improved.

As described above, the light source 13 in FIG. 22 or the like is configured so that the light source unit including the plurality of LED elements 201 that are the light sources are attached to the light receiving end surface 203a that is the light receiver on the end surface of the light guiding body 203. In the manner, the divergence luminous flux emitted from the LED elements 201 is formed to be the substantially collimated light by the lens shape of the light receiving end surface 203a of the light guiding body 203, is guided to propagate in the light guiding body 203 as illustrated with an arrow (a right and left direction in FIG. 23 and others), and is emitted (as the emitted luminous flux 30 in FIG. 22) toward the liquid crystal display panel 11 (an up and down direction in FIG. 23 and others) arranged in substantially parallel to the light guiding body 203 by a luminous-flux direction converting means 204. When the distribution (in other words, density) of the luminous-flux direction converting means 204 is optimized by a shape of the inside or the surface of the light guiding body 203, the unification of the luminous flux entering the liquid crystal display panel 11 can be controlled. In the luminous-flux direction converting means 204, when the surface shape of the light guiding body 203 or the inside of the light guiding body 203 is provided with, for example, portions having a different refractive index, the luminous flux propagating inside the light guiding body 203 is emitted toward the liquid crystal display panel 11 arranged in substantially parallel to the light guiding body 203. This case is practically acceptable if the relative luminance ratio is equal to or higher than 20% when the luminance is compared between the center of the screen and the peripheral portion of the screen in a state in which the liquid crystal display panel 11 normally faces the center of the screen while a point of view is arranged at the same position as that of a diagonal dimension of the screen, and the relative luminance ratio that is higher than 30% provides the further excellent property.

As similar to FIG. 22, note that FIG. 23 is a cross-sectional arrangement diagram for explaining the configuration of the light source (light source 13) in the present embodiment and its function that performs the light polarization conversion in the light source 13 including the light guiding body 203 and the LED element 201. In FIG. 23, the light source 13 includes the light guiding body 203 including the luminous-flux direction converting means 204 being made of for example, plastic or others on its surface or inside, the LED element 201 functioning as the light source, the reflection sheet 205, the waveplate 206, the lenticular lens and others. The liquid crystal display panel 11 including the light polarizer on the light-source light entering surface and the video-light emitting surface is attached to the upper surface of the light source 13.

The display apparatus 1 may have the following configuration. In FIG. 23, the light-source light entering surface (the lower surface in the drawing) of the liquid crystal display panel 11 corresponding to the light source 13 is provided with a film-form or sheet-form reflection-type light polarizer 49. The light source 13 selectively reflects one polarization wave 212 (such as P wave) of the natural luminous flux 210 emitted from the LED element 201 to reflect it by the reflection sheet 205 on one surface (the lower side in the drawing) of the light guiding body 203, and guides it toward the liquid crystal display panel 11 again. Accordingly, the λ/4 plate that is the waveplate is arranged between the reflection sheet 205 and the light guiding body 203 or between the light guiding body 203 and the reflection-type light polarizer 49. In this configuration, the luminous flux reflected is converted from the P-polarization light to the S-polarization light because of being reflected by the reflection sheet 205, and then, being transmitted through the λ/4 plate twice, and the use efficiency of the light-source light functioning as the video light is improved. The video luminous flux (shown with an arrow 213 in FIG. 23), the light intensity of which has been modulated in the liquid crystal display panel 11 in accordance with the video signal, for example, enters a retroreflection optical member 2100 as shown in FIG. 33, is reflected, and then, is propagated in a reflection mirror 2110 and a reflection mirror 2120, and forms the three-dimensional air floating video that is the actual image in the space inside the vehicle in front of the windshield 6 or the space outside the vehicle.

The display apparatus 1 may have the following configuration, In FIG. 23, the light-source light entering surface (the lower surface in the drawing) of the liquid crystal display panel 11 corresponding to the light source 13 is provided with a film-form or sheet-form reflection-type light polarizer 49. The light source 13 selectively reflects one polarization wave 211 (such as S wave) of the natural luminous flux 210 emitted from the LED element 201 to reflect it by the reflection sheet 205 on one surface (the lower side in the drawing) of the light guiding body 203, and guides it toward the liquid crystal display panel 11 again. The λ/4 plate that is the waveplate is arranged between the reflection sheet 205 and the light guiding body 203 or between the light guiding body 203 and the reflection-type light polarizer 49. In this configuration, the luminous flux reflected is converted from the S-polarization light to the P-polarization light because of being reflected by the reflection sheet 205, and then, being transmitted through the λ/4 plate twice, and the use efficiency of the light-source light functioning as the video light is improved. The video luminous flux (shown with an arrow 214 in FIG. 24), the light intensity of which has been modulated in the liquid crystal display panel 11 in accordance with the video signal, for example, enters a retroreflection optical member 2100 as shown in FIG. 33, is reflected, and then, propagates in the reflection mirror 2110 and the reflection mirror 2120, and forms the three-dimensional air floating video that is the actual image in the space inside the vehicle in front of the windshield 6 or the space outside the vehicle.

In the light source 13 shown in FIGs. 23 and 24, since the one polarized wave component is reflected by the reflection-type light polarizer in addition to the function of the light polarizer arranged on the light entering surface of the corresponding liquid crystal display panel 11, a theoretical contrast ratio is calculated from multiplication of an inverse number of a cross transmittance of the reflection-type light polarizer and an inverse number of a cross transmittance caused by the two light polarizers attached to the liquid crystal display panel. Therefore, the high contrast performance is provided. Practically, from experiments, it has been verified that the contrast performance of the display image is improved by ten or more times. As a result, it can be verified that the video with the high quality being equivalent to that of a self-luminous-type organic EL is provided.

### <Second Example of Display Apparatus>

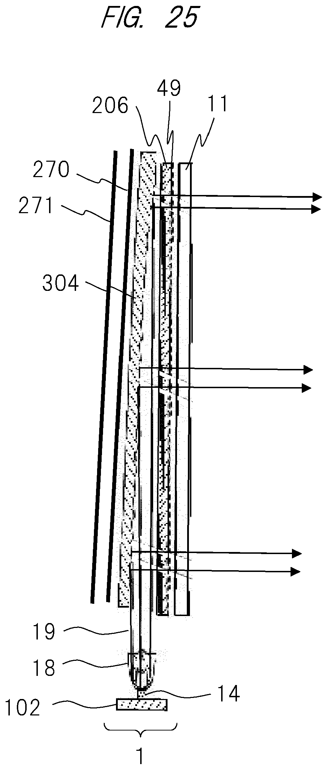

Subsequently, still another example of the specific structure of the display apparatus 1 will be explained with reference to FIG. 25. In a light source of this display apparatus 1, the divergence luminous flux of natural light (that is mixture of the P-polarized light and the S-polarized light) emitted from the LED 14 is converted to the substantially collimated light (luminous flux 19 in an up and down direction in the drawing) by a LED collimator 18, and is reflected as luminous flux in a right and left direction in the drawing toward the liquid crystal display panel 11 by the reflection-type light guiding body 304. The reflection light on this the reflection-type light guiding body 304 enters the reflection-type light polarizer 49 and the waveplate 206 arranged between the liquid crystal display panel 11 and the reflection-type light guiding body 304. The specific polarized wave (such as the S-polarized wave) of this incident light is reflected by the reflection-type light polarizer 49, and this reflected light is converted to the polarized wave (such as the P-polarized wave) to be transmitted through the reflection-type light polarizer 49 when being converted in terms of phase by the waveplate 206, returning to the reflection surface of the reflection-type light guiding body 304 and being transmitted through the waveplate 206 again.

As a result, the natural light emitted from the LED 14 is uniformed to have the specific polarized wave (such as the P-polarized light), and the specific polarized wave enters the liquid crystal display panel 11, is modulated in terms of luminance in accordance with the video signal, and is displayed as the video on the video display surface of the liquid crystal display panel 11. As similar to the above-described example, the structure of FIG. 25 includes a plurality of LEDs 14 (only one of which is illustrated in FIG. 25 because of a cross section) configuring the light source, and each of these LEDs 14 is attached at a predetermined position to correspond to the LED collimator 18. Note that each LED collimator 18 is made of for example, a light-transmittable resin such as acrylic resin or glass. As similar to the above-described example, the LED collimator 18 has, for example, a conically convex outer circumferential surface formed by rotation of a paraboloid cross section, and an apex of the outer circumferential surface has a concave portion with a convex portion (in other words, a convex lens surface) at center of its apex. And, center of a plane portion of this LED collimator 18 has a convex lens surface that protrudes outward (or may be a concave lens surface that is recessed inward). Note that the paraboloid surface forming the conically-shaped outer circumferential surface of the LED collimator 18 is set within a range of an angle allowing the light peripherally emitted from the LED element 14 to be totally reflected inside the outer circumferential surface, or is provided with the reflection surface.

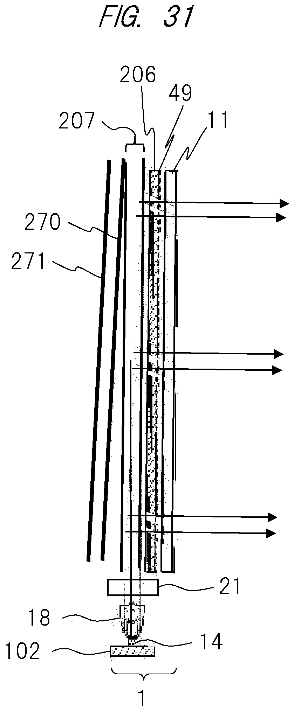

The structure shown in FIG. 25 is substantially the same as the structure of the light source of the display apparatus 1 shown in FIG. 31. Further, the light having been converted to the substantially collimated light by the LED collimator 18 shown in FIG. 31 is reflected by the reflection-type light guiding body 304, and the specific polarized light is transmitted by the function of the reflection-type light polarizer 49 while other polarized light having been reflected is transmitted through the light guiding body 304 again and is reflected by the reflection plate 271 arranged on the other surface of the reflection-type light guiding body 304, the surface being in not contact with the liquid crystal display panel 11. In this case, this light is converted in terms of light polarization when being transmitted through the λ/4 plate 270 that is the waveplate twice, the waveplate being arranged between the reflection plate 271 and the liquid crystal display panel 11, is transmitted through the reflection-type light guiding body 304 again, is transmitted through the reflection-type light polarizer 49 arranged on the opposite surface, and is made to enter the liquid crystal display panel 11 while being uniformed in terms of the light polarization direction. As a result, in this configuration, all the light components of the light source can be used, and therefore, the use efficiency of the light is doubled.

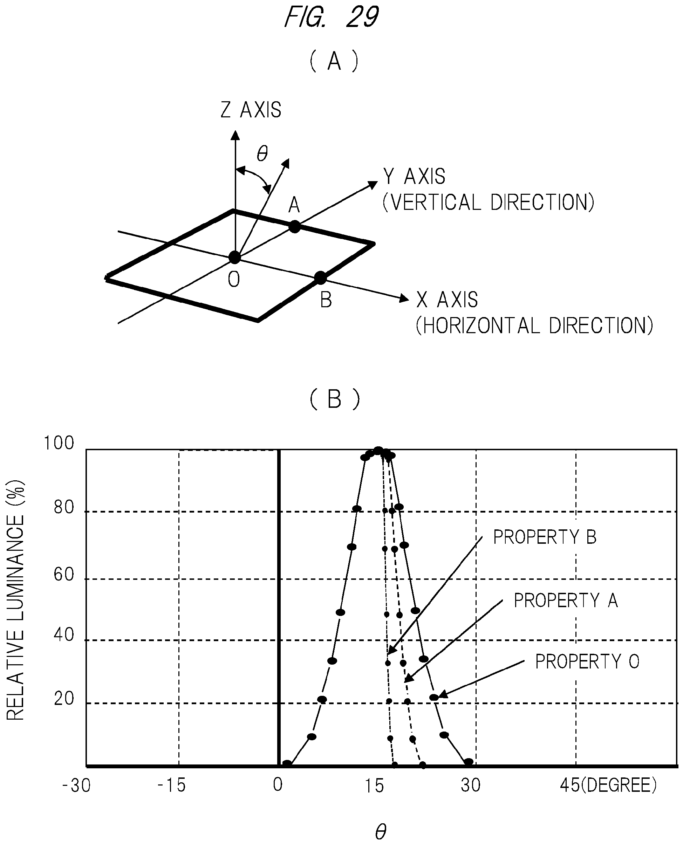

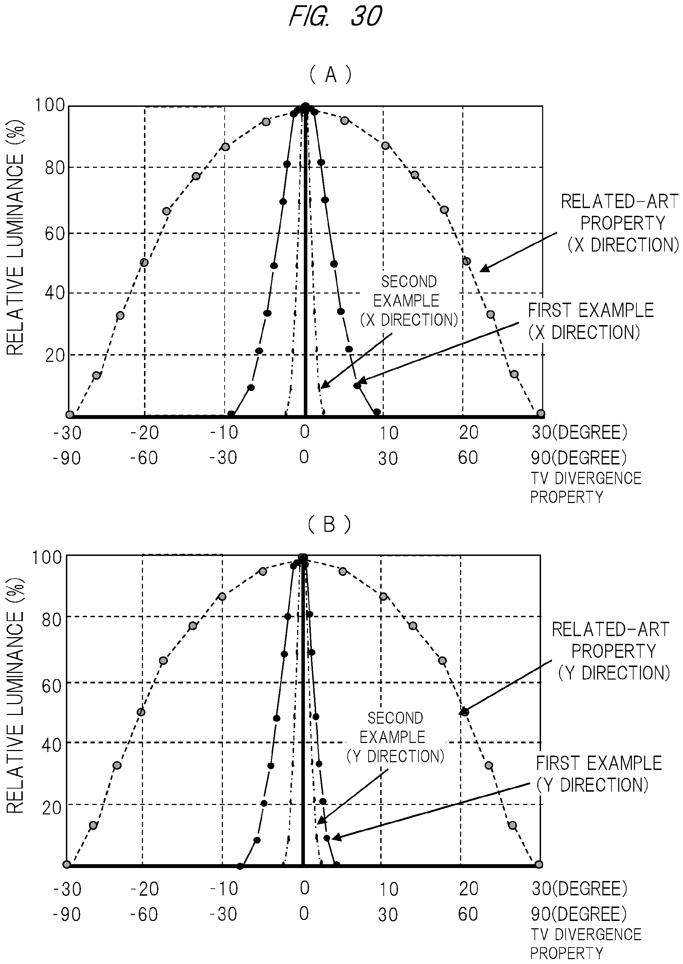

In a related-art TV set, as shown in FIGs. 29 and 30, the light emitted from the liquid crystal display panel 11 has a divergence property that is the same between a screen horizontal direction (illustrated with an X axis in FIGs. 29(A) and 30(A)) and a screen vertical direction (illustrated with a Y axis in FIGs. 29(A) and 30(B)), and an angle having a luminance that is 50% of a luminance of front view is about 60 degrees that is a wide angle, and therefore, the video of the TV set can be viewed from any position. On the other hand, in the divergence property of the luminous flux emitted from the liquid crystal display panel 11 of the present example, a viewing angle having a luminance that is 50% of a luminance of front view (angle of 0 degree) is set to 4 degrees that is about 1/15 of 60 degrees that is the directionality property of the related-art TV as shown in the first example of FIG. 30(A). Similarly, a reflection angle of the reflection-type light guiding body 304, an area of the reflection surface and others are optimized so that the upper viewing angle is reduced to be about 1/3 of the lower viewing angle so that upper and lower viewing angles in the vertical direction are set to be unequal. In addition to this result, the effect is increased to 1.8 times since the light-source light is converted in terms of polarization, and therefore, light quantity of the video that propagates toward the viewing direction is significantly increased more than that of a related-art liquid crystal TV by the combination use of the above-described technical means, and the luminance is equal to or higher than 80 times. Note that the coordinates in the X and Y directions in FIG. 30 are the same as those of FIG. 29(A).

Further, in the case of the viewing angle property described in the second example of FIG. 30, a viewing angle having a luminance that is 50% of a luminance of front view (angle of 0 degree) is set to 1 degree that is about 1/60 of 60 degrees in the related art. Similarly, the reflection angle of the reflection-type light guiding body 304, the area of the reflection surface and others are optimized so that the upper and lower viewing angles in the vertical direction are set to be equal to be reduced to be about 1/12 of the related art As a result, in the present embodiment, light quantity of the video that propagates toward the viewing direction is significantly increased more than that of a related art liquid crystal TV, and the luminance is equal to or higher than 700 times. The video source providing the video light of the specific polarization wave can be provided by arrangement of a polarization converting element for the polarization conversion described later to uniform the specific polarization wave, the usage of the light source that is nearly the laser surface light source having an extremely small divergence angle, and the usage of the liquid crystal display panel to modulate the light intensity in accordance with the video signal.

When the viewing angle is set to the narrow angle as described above, the luminous flux quantity that propagates toward the viewing direction can be concentrated, and therefore, the light use efficiency is significantly improved. As a result, according to the present embodiment, even in the use of the related-art liquid crystal display panel for TV, the significant improvement of the luminance can be achieved at the similar power consumption by the control for the light divergence property of the light source. In this manner, a display apparatus capable of displaying the video for outside can be achieved.

In a basic configuration of the examples, as shown in FIG. 34 described above, the luminous flux having the narrow-angle directionality property is made incident on the liquid crystal display panel 11 and is modulated in luminance in accordance with the video signal by the light source 13, so that the air floating video 220 having been resulted from causing the retroreflection optical member 2100 to reflect the video information displayed on the screen of the liquid crystal display panel 11 is displayed inside/outside a room.

### <First Example of Light Source>

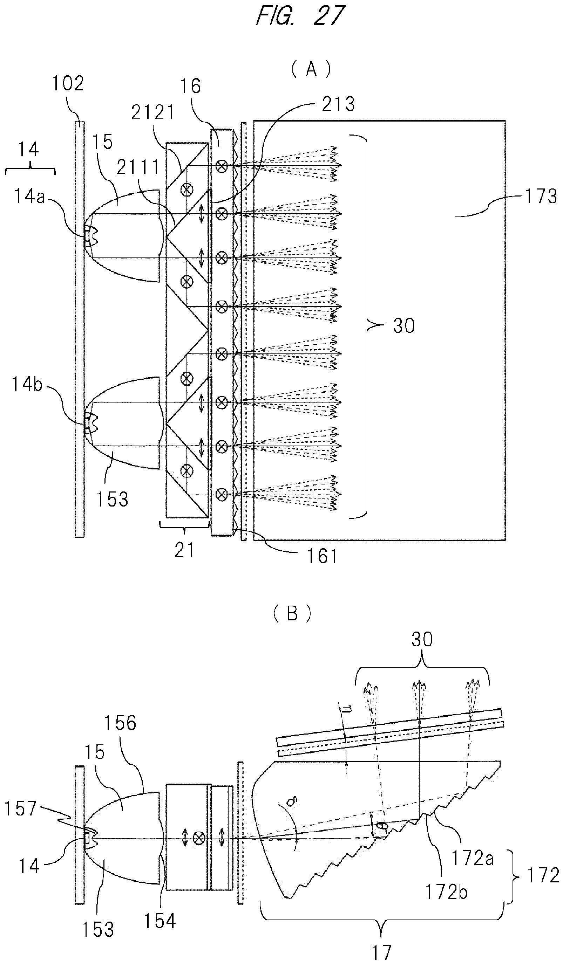

Subsequently, an example of structure of the optical system such as the light source housed in the case will be described in detail with reference to FIGs. 26, 27(A) and 27(B).

LEDs 14 (14a and 14b) configuring the light source are illustrated in FIGs. 26 to 27. These LEDs 14 are attached at predetermined positions to correspond to the collimator 15. Note that the LED collimator 15 is made of for example, a light-transmittable resin such as acrylic resin. As shown in FIG. 27(B), the LED collimator 15 has a conically convex outer circumferential surface 156 formed by rotation of a paraboloid cross section, and an apex of the outer circumferential surface 156 has a concave portion 153 with a convex portion (in other words, a convex lens surface) 157 at center of the apex. And, center of a plane portion of this LED collimator 15 has a convex lens surface that protrudes outward (or may be a concave lens surface that is recessed inward). Note that the paraboloid surface forming the conically-shaped outer circumferential surface 156 of the LED collimator 15 is set within a range of an angle allowing the light peripherally emitted from the LED element 14 to be totally reflected inside the paraboloid surface 156 of the outer circumferential surface, or is provided with the reflection surface.

The LEDs 14 (14a and 14b) are arranged at predetermined positions, respectively, on the surface of the LED board 102 that is its circuit board. The LED board 102 is arranged and fixed to correspond to the LED collimator 15 so that the LED element 14 on the surface is positioned at center of the concave portion 153 of the LED collimator 15. In such a configuration, among the light emitted from the LED element 14, particularly the light emitted upward (in the right direction in the drawing) from the center of the LED 14 is collected to form the substantially collimated light by the two convex lens surfaces 157 and 154 forming the outer shape of the LED collimator 15. The light peripherally emitted from other portions is reflected by the paraboloid surface 156 forming the conically-shaped outer circumferential surface of the LED collimator 15, and is similarly collected to form the substantially collimated light In other words, by the LED collimator 15 having the convex lens formed on its center and the paraboloid surface formed on the peripheral portion, almost all the light components generated by the LED element 14 can be extracted as the collimated light In this manner, the use efficiency of the generated light can be improved.

In FIG. 26, note that a light emission region of the LED collimator 15 is provided with the polarization converter element 21. As clearly seen from FIG. 27(A), the polarization converter element 21 is made of combination of a pillar-shaped light transmittable member having a parallelogram cross section (referred to as parallelogram pillar below) and a pillar-shaped light transmittable member having a triangle cross section (referred to as triangle pillar below), and a plurality of these elements are arranged in an array form in parallel to a surface orthogonal to an optical axis of the collimated light emitted from the LED collimator 15. Further, a polarization beam splitter (referred to as PBS film) 2111 and a reflection film 2121 are alternately arranged at a boundary between the adjacent light transmittable members that are arranged in the array form. The emission surface from which the light having entered the polarization converter element 21 and been transmitted through the PBS film 2111 is emitted includes a λ/2 waveplate 213.

The emission surface of the polarization converter element 21 further includes the rectangular converging/diverging block 16 as shown in FIG. 27(A). In other words, the light emitted from the LED 14 is formed as the collimated light by the function of the LED collimator 15, enters the converging/diverging block 16, and is diverged by a texture 161 on the emission side of the converging/diverging block 16, and then, reaches the light guiding body 17.

The light guiding body 17 is a member made of a light transmittable resin such as acrylic resin and shaped in a bar having a substantially triangle cross section (as shown in FIG. 27(B)). The light guiding body 17 has a light-guiding-body light entrance portion (including a light-guiding-body light entrance surface) 171 facing an emission surface of the converging/diverging block 16 to interpose a first divergence plate 18a therebetween, a light-guiding-body light reflection portion (including a light-guiding-body light reflection surface) 172 forming an oblique surface, and a light-guiding-body light emission portion (including a light-guiding-body light emission surface) 173 facing the liquid crystal display panel 11 to interpose a second divergence plate 18b therebetween.

As shown in FIG. 26, a lot of reflection surfaces 172a and joint surfaces 172b are alternately formed in a saw-teeth form on the light-guiding-body light reflection portion 172 of this light guiding body 17. And, an angle "αn" (n: a natural number of for example, 1 to 130 in the present example) is formed by the reflection surface 172a (a right upward line component in the drawing) and a horizontal surface shown (in a right and left direction in the drawing) with a dashed dotted line in the drawing. As its one example, the angle "αn" is set to be equal to or smaller than 43 degrees (but equal to or larger than 0 degree) here.

The light-guiding-body light entrance portion 171 is formed to have a curved convex shape being oblique toward the light source. In this manner, the collimated light emitted from the light emission surface of the converging/diverging block 16 is diverged and enters the light-guiding-body light entrance portion 171 through the first divergence plate 18a, reaches the light-guiding-body light reflection portion 172 while slightly bending (in other words, being polarized) upward by the light-guiding-body light entrance portion 171 as clearly seen from the drawing. This light is reflected by this light-guiding-body light reflection portion 172, and reaches the liquid crystal display panel 11 arranged on the light-guiding-body light emission portion 173 on the upper side in the drawing.

According to the display apparatus 1 descried in detail above, the light use efficiency and the uniform illumination property can be more improved, and the apparatus including the modularized light source for the S-polarized wave can be manufactured to be downsized at a low cost. In the above-described explanation, note that the polarization converter element 21 is attached at a subsequent stage of the LED collimator 15. However, the present invention is not limited to this arrangement. Arrangement of the polarization converter element 21 in a light path extending to the liquid crystal display panel 11 can also provide the same function and effect

A lot of reflection surfaces 172a and joint surfaces 172b are alternately formed in the saw-teeth form on the light-guiding-body light reflection portion 172. The illumination luminous flux is totally reflected on each reflection surface 172a, and propagates upward. Besides, the luminous flux enters the light-direction converting panel 54 for controlling the directionality as the substantially collimated diverged luminous flux by the narrow-angle divergence plate arranged on the light-guiding-body light emission portion 173, and the luminous flux enters the liquid crystal display panel 11 in an oblique direction as shown in FIG. 26. In the present example, the light-direction converting panel 54 is arranged between the light-guiding-body light emission portion 173 and the liquid crystal display panel 11. However, the present invention is not limited to this arrangement, and the arrangement of the light-direction converting panel 54 on the emission surface of the liquid crystal display panel 11 can also provide the same effect

### <Second Example of Light Source>

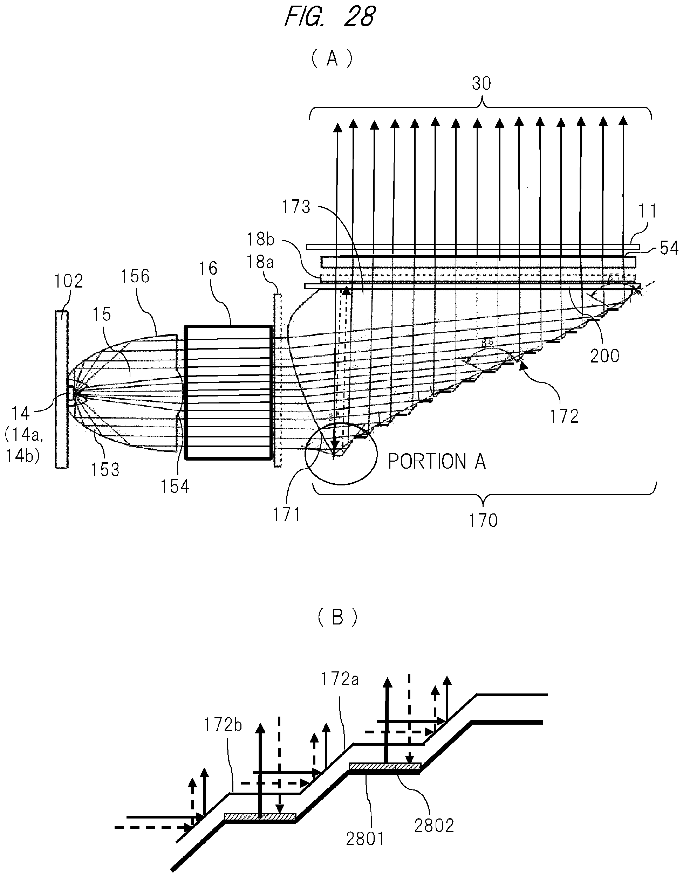

Another example of structure of the optical system such as the light source 13 is shown in FIG. 28. As similar to the example shown in FIG. 26, a plurality of (in this example, two) LEDs 14 (14a and 14b) configuring the light source are illustrated in FIG. 28. These LEDs 14 are attached at predetermined positions to correspond to the LED collimator 15. Note that the LED collimator 15 is made of, for example, a light-transmittable resin such as acrylic resin. As similar to the example shown in FIG. 26, the LED collimator 15 has a conically convex outer circumferential surface 156 formed by rotation of a paraboloid cross section, and an apex of the outer circumferential surface 156 has a concave portion 153 with a convex portion (in other words, a convex lens surface) 157 formed at center of the apex. Center of a plane portion of the LED collimator 15 has a convex lens surface 154 that protrudes outward (or may be a concave lens surface that is recessed inward). Note that the paraboloid surface 156 forming the conically-shaped outer circumferential surface of the LED collimator 15 is set within a range of an angle allowing the light peripherally emitted from the LED element 14 to be totally reflected inside the paraboloid surface 156, or is provided with the reflection surface.

The LEDs 14 (14a and 14b) are arranged at predetermined positions, respectively, on the surface of the LED board 102 that is its circuit board. The LED board 102 is arranged and fixed so that each of the LEDs 14 (14a and 14b) on the surface is positioned at center of the concave portion 153 to correspond to the LED collimator 15. In such a configuration, among the light emitted from the LED 14, particularly the light emitted upward (in the right direction in the drawing) from the center of the LED is collected by the two convex lens surfaces 157 and 154 forming the outer shape of the LED collimator 15 to form the collimated light. The light peripherally emitted from other portions is reflected by the paraboloid surface 156 forming the conically-shaped outer circumferential surface of the LED collimator 15, and is similarly collected to form the collimated light In other words, by the LED collimator 15 having the convex lens formed on its center and the paraboloid surface formed on the peripheral portion, almost all the light components generated by the LED element 14 can be extracted as the collimated light. In the manner, the use efficiency of the generated light can be improved.

In FIG. 28(A), note that a light emission region of the LED collimator 15 is provided with the light guiding body 170 to interpose the first divergence plate 18a therebetween. The light guiding body 170 is a member made of a light transmittable resin such as acrylic resin and shaped in a bar having a substantially triangle cross section. As clearly seen from FIG. 28(A), the light guiding body 170 has a light-guiding-body light entrance portion 171 of the light guiding body 170 which faces an emission surface of the divergence block 16 to interpose the first divergence plate 18a therebetween, a light-guiding-body light reflection portion 172 forming an oblique surface, and a light-guiding-body light emission portion 173 which faces the liquid crystal display panel 11 that is a liquid crystal display element to interpose a reflection-type light polarizer 200 therebetween.

For example, if a member having a property reflecting the P-polarized light but transmitting the S-polarized light is adopted as the reflection-type light polarizer 200, the P-polarized light of the natural light emitted from the LED that is the light source is converted to the S-polarized light when being reflected by the reflection-type light polarizer 200, being transmitted through a λ/4 plate 2802 arranged on the light-guiding-body light reflection portion 172 shown in FIG. 28(B), being reflected by a reflecting surface 2801, and being transmitted through the λ/4 plate 2802 again. In this manner, all the luminous fluxes entering the liquid crystal display panel 11 are uniformed to the S-polarized light.

Similarly, if a member having a property reflecting the S-polarized light but transmitting the P-polarized light is adopted as the reflection-type light polarizer 200, the S-polarized light of the natural light emitted from the LED that is the light source is converted to the P-polarized light when being reflected by the reflection-type light polarizer 200, being transmitted through the λ/4 plate 2802 arranged on the light-guiding-body light reflection portion 172 shown in FIG. 28(B), being reflected by the reflecting surface 2801, and being transmitted through the λ/4 plate 2802 again. In the manner, all the luminous fluxes entering the liquid crystal display panel 11 are uniformed to the P-polarized light Even by the above-described structure, the light-polarization conversion is achieved.

### <Third Example of Light Source>

Another example of structure of the optical system such as the light source will be explained with reference to FIG. 25. In the present example, as shown in FIG. 25, the diverged luminous flux of natural light (that is mixture of the P-polarized light and the S-polarized light) emitted from the LED 14 is converted to the substantially collimated light by the collimator lens 18, and is reflected toward the liquid crystal display panel 11 by the reflection-type light guiding body 304. The reflection light enters the reflection-type light polarizer 206 arranged between the liquid crystal display panel 11 and the reflection-type light guiding body 304. The specific polarized wave (such as the S-polarized wave) is converted in terms of light polarization when being reflected by the reflection-type light polarizer 206, being transmitted through a surface connecting the reflection surface of the reflection-type light guiding body 304, and being reflected by the reflection plate 271 facing the opposite surface of the reflection-type light guiding body 304 to be transmitted through the λ/4 plate 270 that is the waveplate twice. The polarized light (such as the P-polarized wave) is transmitted through the reflection-type light guiding body 304 and the reflection-type light polarizer 206, enters the liquid crystal display panel 11, and is modulated into the video light. By the combination use of the specific polarized wave and the polarization-converted polarized wave plane, the light use efficiency is doubled compared to the general one, and a polarization degree (in other words, extinction ratio) of the reflection-type light polarizer 206 is also included in an extinction ratio of the entire system. Therefore, when the light source of the present example is used, the contrast ratio of the air floating video display system can be significantly improved.

As a result, in the present example, the natural light emitted from the LED 14 is uniformed to have the specific polarized wave (such as the P-polarized wave). As similar to the above-described example, in the present example, a plurality of LEDs 14 configuring the light source are provided, and these LEDs 14 are attached at predetermined respective positions to correspond to the LED collimators 18. Note that each LED collimator 18 is made of for example, a light transmittable resin such as acrylic resin or glass. As similar to the above description, the LED collimator 18 has, for example, a conically convex outer circumferential surface formed by rotation of a paraboloid cross section, and an apex of the outer circumferential surface has a concave portion with a convex portion (in other words, a convex lens surface) formed at center of the apex of the outer circumferential surface. Center of a plane portion of the LED collimator 18 has a convex lens surface that protrudes outward (or may be a concave lens surface that is recessed inward). Note that the paraboloid shape forming the conically-shaped outer circumferential surface of the LED collimator 18 is set within a range of an angle allowing the light peripherally emitted from the LED element 14 to be totally reflected inside the paraboloid surface, or is provided with a reflection surface.

The LEDs 14 are arranged at predetermined positions, respectively, on the surface of the LED board 102 that is its circuit board. The LED board 102 is arranged and fixed so that the LED 14 on the surface is positioned at center of the concave portion of the LED collimator 18 to correspond to the collimator 18. In such a configuration, among the light emitted from the LED 14, particularly the light emitted from its center is collected by the two convex lens surfaces forming the outer shape of the LED collimator 18 to form the collimated light. The light peripherally emitted from other portions is reflected by the paraboloid surface forming the conically-shaped outer circumferential surface of the LED collimator 18, and is similarly collected to form the collimated light. In other words, by the LED collimator 18 having the convex lens formed on its center and the paraboloid surface formed on the peripheral portion, almost all the light components generated by the LED 14 can be extracted as the collimated light In this manner, the use efficiency of the generated light can be improved.

### <Fourdi Example of Light Source>

Further, another example of structure of the optical system such as the light source will be explained with reference to FIG. 31. In the configuration of FIG. 31, two optical sheets (in other words, divergence sheets, divergence films) 207 that convert the divergence properties are used for the light emission region of the LED collimator 18, and the light emitted from the LED collimator 18 is caused to enter a gap between the two optical sheets 207. The optical sheets 207 convert the divergence properties in a up and down direction (in-screen vertical direction) in the drawing configuring the plane and a front and back direction (in-screen horizontal direction) in the drawing. When the optical sheet 207 is made of one sheet, the divergence properties in the vertical direction and the horizontal direction are controlled by fine shapes of front and back surfaces of the sheet Alternatively, a plurality of the optical sheets 207 may be used so that the optical sheets separately play roles of the functions, respectively. By the front and back surface shapes of the optical sheet 207, the divergence angle of the light in the screen vertical direction emitted from the LED collimator 18 is matched with the width of the vertical surface of the reflection surface of the optical sheet. While taking the number of LEDs 14 and the divergence angle from the optical element (optical sheet 207) as design parameters, the divergence property of the horizontal direction may be optimally designed so that the surface density of the luminous flux emitted from the liquid crystal display panel 11 is uniformed. In other words, the divergence properties in the present example are controlled by the surface shapes of one or more optical sheets 207 in place of the light guiding body 304. In the present example, the light polarization is converted by the same method as that of the third example of the light source. On the other hand, the light polarization may be first converted by the polarization converter element 21 arranged between the LED collimator 18 and the optical sheet 207, and then, the light-source light may be caused to enter the optical sheet 207.

For example, if a member having a property reflecting the S-polarized light but transmitting the P-polarized light is adopted as the reflection-type light polarizer 206, the S-polarized light of the natural light emitted from the LED 14 that is the light source is converted to the P-polarized light when being reflected by the reflection-type light polarizer 206, being transmitted through the waveplate 270, being reflected by the reflecting surface 271, and being transmitted through the waveplate 270 again. An optimal value of a thickness of this waveplate 270 is required to be adopted based on an incident angle of the light beam on the waveplate 270, and the optimal value is in a range of λ/16 to λ/4.

### <Fifth Example of Light Source>

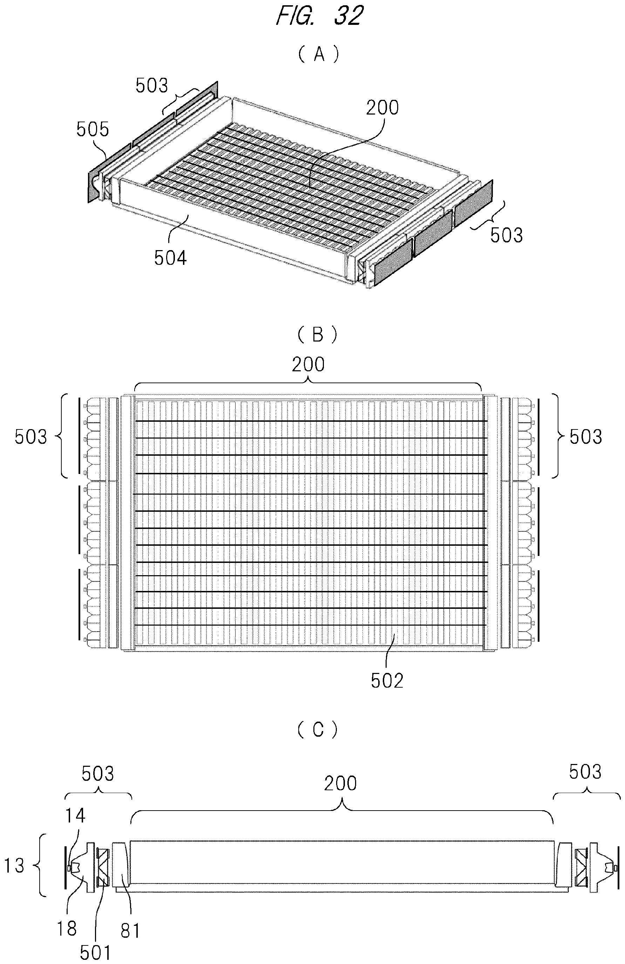

Another example of structure of the optical system such as the light source will be explained with reference to FIG. 32. As shown in FIG. 32(C), in the light source 13 in the present example, a light emission region of the LED collimator 18 is provided with a polarization converter element 501, and the natural light emitted from the LED 14 (LED element) is uniformed to have the specific polarization wave by the polarization converter element 501, and is caused to enter an optical element 81 for controlling the divergence properties. Then, in the optical element 81, light distribution property toward the reflection surface of the reflection-type light guiding body 200 is optimized by control of the divergence properties of the incident light in the screen vertical direction (up-and-down direction in FIG. 32(C)) and the screen horizontal direction (front-and-back direction in FIG. 32(C)). The surface of the reflection-type light guiding body 200 is provided with an irregular surface pattern 502 as shown in FIG. 32(B), and reflects incident light emitted from the optical element 81 toward a video display apparatus (not illustrated) arranged on a facing surface of the reflection-type light guiding body 200 to provide the desired divergence properties. The arrangement accuracy of the LED 14 that is a light source and the LED collimator 18 greatly influences the efficiency of the light source. Therefore, typically, the optical axis accuracy is required to be an accuracy of about 50 µm. Therefore, the present inventor has employed the following configuration as a countermeasure against the problem of a decrease in mounting accuracy due to expansion of the LED collimator 18 caused by heat generation of the LED 14. That is, in the present example, as shown in FIGs. 32(A) and 32(B), a light source unit 503 structure is made by unifying some LEDs 14 and LED collimators 18, and a single or a plurality of (three in this example) light source units 503 are used in the light source to reduce the decrease in mounting accuracy described above.

In the example shown in FIGs. 32(A), 32(B) and 32(C), a plurality of (totally six) light source units 503 having the LED elements and the LED collimators 18 unified together are incorporated at each of longitudinal (right-and-left direction in the drawing) both ends of the reflection-type light guiding body 200. In the present example, three light source units 503 arranged in the screen vertical direction (up-and-down direction in FIG. 32(B)) are incorporated for each of right and left sides of the reflection-type light guiding body 200. This achieves luminance unification of the light source 13. A plurality of irregular surface patterns 502 substantially parallel to the light source unit 503 are formed on the reflection surface (a surface having the irregular surface pattern 502 formed thereon in FIG. 32(B)) of the reflection-type light guiding body 200. A cross section in which the surface irregularities of the irregular surface pattern 502 are formed is a surface in FIG. 32(C), a direction in which the surface irregularities of the irregular surface pattern 502 are repeated is a right-and-left direction in FIG. 32(B), and a direction in which one irregularity extends is an up-and-down direction in FIG. 32(B). One irregular surface pattern 502 also has a polyhedron formed on its surface. This enables the amount of light entering the video display apparatus to be controlled with high accuracy.

Though the shape of the reflection surface of the reflection-type light guiding body 200 has been described as the irregular surface pattern 502 in the present example, the shape is not limited thereto, but the reflection surface may be patterned with regularly or irregularly patterned shapes, such as a triangular surface or a corrugated surface, and the patterned surface shape may be configured to control a light distribution pattern from the reflection-type light guiding body 200 toward the video display apparatus. In addition, as shown in FIG. 32(A), it is preferred that a side surface (a side surface not provided with the light source unit 503) of the reflection-type light guiding body 200 be provided with a light block wall 504 in order to prevent the light controlled by the LED collimator 18 from leaking outside from the light source 13, and that the LED element (the LED 14) be designed to have heat dissipation performance enhanced by a metallic base plate 505 provided outside.

### <Lenticular Lens>

A function of a lenticular lens configured to control the divergence properties of the emission light emitted from the display apparatus 1 will be described below By the lenticular lens having an optimized lens shape, the light can be emitted from the display apparatus 1, and provide the air floating video in an in-car space on a front surface of a windshield (FIG. 33) of an automobile or in a space outside the automobile. In other words, the present embodiment is configured so that, for the video light emitted from the display apparatus 1, two lenticular lends are combined or a sheet having micro lens arrays arranged in a matrix for controlling the divergence properties is provided, and therefore, the luminance (in other words, the relative luminance) of the video light in X-axis and Y-axis directions in the screen (in FIG. 29) can be controlled in accordance with its reflection angle (0 degree in the vertical direction). In the present embodiment, by such a lenticular lens, the luminance property in the vertical direction (Y axis direction) is made sharper than the related art as shown in FIG. 29(B), and besides, a balance in the directionality in the up and down direction (positive and negative direction of the Y-axis) is changed, and therefore, the luminance (relative luminance) of light due to reflection and/or divergence can be increased. Thus, the present embodiment can provide the video light having the narrow divergence angle (in other words, the high rectilinear propagation property) and having only the specific polarization component such as video light emitted from a surface-emitting laser video source, can reduce the ghost image generated by the retroreflection optical member in the case of using the related art, and can control the air floating video based on the retroreflection so as to be efficiently delivered to the eyes of the viewing person.

In addition, the light source described above is used to provide a significantly narrow-angle directionality property both in the X-axis direction and in the Y-axis direction for the divergence properties (referred to as "related art property" in the drawing) of the emission light emitted from a general liquid crystal display panel shown in FIGs. 30(A) and 30(B), and therefore, the display apparatus configured to emit the light of the specific polarization wave and emit the video luminous flux almost parallel to the specific direction can be achieved.

FIG. 29 shows an example of a property of the lenticular lens adopted in the present embodiment. This example particularly shows that a property in the Y-direction (vertical direction) in FIG. 29(A) is an angle "θ". In FIG. 29(B), a "property O" shows a luminance property, a peak of which in the light emission direction shifts upward by an angle of about 30 degrees from the vertical direction (0 degree) and which is symmetrical in the up and down direction. In addition, a "property A" and a "property B" further show examples of a property in which the video light above the peak luminance is collected at about 30 degrees to enhance the luminance (relative luminance). Therefore, in the property A and the property B, the light luminance (relative luminance) rapidly decreases more than that of the property O at an angle exceeding 30 degrees.

In other words, when the video luminous flux emitted from the display apparatus 1 is caused to enter the retroreflection optical member 2, the emission angle and/or the viewing angle of the video light having the narrow angle unified by the light source 13 can be controlled by using the optical system including the lenticular lens described above, and therefore, the degree of freedom of placement of the retroreflection optical member 2 can be significantly improved. Consequently, the degree of freedom related to the imaging position of the air floating video to be formed at a desired position after being reflected by or transmitted through the windshield can be significantly improved. Consequently, the light having the narrow divergence angle (the high rectilinear propagation property) and having only the specific polarization component can be efficiently delivered to the eyes of the viewing person inside or outside a room. This enables the viewing person to correctly recognize the video light and obtain its information even when the intensity (the corresponding luminance) of the video light emitted from the display apparatus 1 decreases. In other words, by reducing the output of the display apparatus 1, a display apparatus having low power consumption can be achieved.

In place of a related-art HUD apparatus, the present embodiment can provide an air floating video display apparatus that can display a required video as an air floating video in a vehicle, particularly in a space between a windshield and a driver, without the reflection of the video toward the windshield. Thus, this can provide an air floating video display apparatus that is applicable to automobile models having different body designs.

In addition, the present embodiment can achieve an air floating video display apparatus that is applicable to automobile models having different windshield shape and/or tilt which are obstacle factors of installation in a related art HUD, and that can display an air floating video with high visual recognition.

The above-described embodiments include the following configuration. The air floating video display apparatus includes: a liquid crystal display panel serving as a video source; and a light source configured to supply light of specific polarization directionality to the video source and to have a narrow divergence angle. The light source includes: a point-type or surface-type light source; an optical member configured to reduce a divergence angle of light emitted firm the light source; and a light guiding body having a reflection surface configured to propagate light to the video source. The light guiding body is arranged to face the video source, and has, in its inside or surface, a reflection surface reflecting the light emitted firm the light source toward the video source, and propagates the light toward the video source. The video source modulates light intensity in accordance with a video signal. In the light source, the divergence angle of the luminous flux entering firm the light source into the video source is partially or entirely controlled by a shape and surface roughness of the reflection surface of the light source. In the air floating video display apparatus, the video luminous flux having the narrow divergence angle and emitted firm the video source is reflected by or transmitted through a retroreflection optical member, and aerially forms the air floating video.

Further, the formation of the ghost image can be suppressed by taking into consideration the arrangement of the optical system so that the video light emitted firm the video source has the narrow-angle divergence property while the external light is prevented firm entering the retroreflection optical member, and besides, the ghost light generated by the retroreflection optical member is prevented from contributing to the imaging of the air floating video by the arrangement of the optical sheet for controlling the divergence angle of the emitted light on the light emission surface of the retroreflection optical member, on the light emission surface of the liquid crystal display panel or on both light emission surfaces, so that the image quality of the resultant air floating video is significantly improved. And, in order to reduce the ghost image formed by the entering of the external light into the retroreflection optical member, the retroreflection optical member is arranged almost vertically to the opening portion of the air floating video display apparatus.

Meanwhile, in the air floating video display apparatus, in order to make the size of the air floating video larger than that of the opening portion of the air floating video display apparatus, the video luminous flux passing through the opening portion of the air floating video display apparatus is controlled to enlarge the air floating video. More specifically, the video enlarging optical element (video light control film) for controlling the emission direction in accordance with the pixel to enlarge the display screen is arranged between the retroreflection optical member and the eye point of the viewing person (that is the corresponding imaging position of the air floating video). In this manner, the dimension of the air floating video and the shape of the imaging surface are controlled.

In addition, in order to enable the imaging position of the re-imaged video to be controlled for each pixel of the display apparatus, the information for the three-dimensional direction can be added to the video information. And, the surface roughness of the air-video enlarging optical element is set to predetermined surface roughness to control the focus texture of the pixel of the enlarged air floating video. Similarly, in order to reduce the blur amount of the air floating video, the surface roughness of the reflection surface of the retroreflection optical member is decreased to be equal to or smaller than a predetermined numerical value per unit length to reduce the blur amount of the air floating video and improve the visual recognition.

On the other hand, in order to downsize the air floating video display apparatus, the liquid crystal display panel that is the video source is arranged so as to change the polarization direction of the video light emitted for each of the video display regions divided in the vertical direction or the horizontal direction of the screen. Consequently, the air floating video is formed for each image of each of the plurality of divided regions of the screen, and therefore, the apparatus can be thinned, and the apparatus set can be downsized.

Further, the protrusion amount (floating amount) of the air floating video formed by the air floating video display apparatus is achieved by using the function of the video enlarging optical element to control the imaging position of the re-imaged video for each pixel of the display apparatus.

In the foregoing, various embodiments have been concretely described. The present invention is not limited to the foregoing embodiments, and includes various modification examples. In the above-described embodiments, the entire system and so forth have been explained in detail for easily understanding the present invention. However, the above-described embodiments do not always include all components explained above. Also, a part of the structure of one embodiment can be replaced with the structure of another embodiment, and besides, the structure of another embodiment can be added to the structure of one embodiment. Further, another structure can be added to/eliminated finm/replaced with a part of the structure of each embodiment

In the technique according to the present embodiments, the air floating video is displayed in a state where the high-resolution and high-luminance video information is aerially floated, and, as a result, for example, the user can perform operations without concern about contact infection in illness. When the technique according to the present embodiments is applied to the system that is used by unspecified users, a contactless user interface having the less risk of the contact infection in illness and being available without the concern can be provided. The technique contributes to "the third goal: Good Health and Well-being (for all people)" of the sustainable development goals (SDGs) advocated by the United Nations.

And, since only the normal reflection light is efficiently reflected with respect to the retroreflection member by the technique according to the present embodiment of making the divergence angle of the emitted video light small and making the uniform specific polarized wave, the light use efficiency is high, and the bright and clear air floating video can be provided. The technique according to the present embodiment can provide a contactless user interface being excellent in availability and capable of significantly reducing the power consumption. The technique contributes to "the ninth goal: Industry, Innovation and Infrastructure" and "the eleventh goal: Sustainable Cities and Communities" of the sustainable development goals (SDGs) advocated by the United Nations.

Further, the technique according to the present embodiment can form the air floating video based on the video light having the high directionality (rectilinear propagation). In the technique according to the present embodiment, even in case of display of the video that requires the high security in an ATM at bank, a ticketing machine at station and so forth or display of the video having high confidentiality that needs to be confidential to a person who faces the user, the display of the video light having the high directionality can provide a contactless user interface having the less risk of the peek of the air floating video by the different person from the user. The technique contributes to "the eleventh goal: Sustainable Cities and Communities" of the sustainable development goals (SDGs) advocated by the United Nations.

### EXPLANATION OF REFERENCE CHARACTERS

1 ... display apparatus, 2 (2A,2B) ... retroreflection optical member, 11 ... liquid crystal display panel, 13 ... light source, 100 ... transparent member, 101 and 102 ... polarization splitter, 111 ... λ/2 plate, 220 ... air floating video (three-dimensional air floating video, enlarged image), 2150 and 1100 ... optical element

## Claims

1. An air floating video display apparatus forming an air floating video comprising:
an opening portion transmitting video light of a specific polarization wave forming the air floating video therethrough;
a liquid crystal display panel serving as a video source;
a light source supplying light of a specific polarization directionality to the video source;
a retroreflection optical member having a retroreflection surface provided with a waveplate;
a polarization splitter arranged in a space connecting an imaging position of the air floating video and the retroreflection optical member, and
an optical element arranged at a position near the opening portion as a position through which video luminous flux emitted for each pixel of the video source is transmitted,
wherein video light of one specific polarization wave emitted from the video source is transmitted through or reflected by the polarization splitter, and
the air floating video that is an actual image is displayed outside the opening portion, based on the video light having been transmitted through or reflected by the polarization splitter, and then, being transmitted through the optical element

2. The air floating video display apparatus according to claim 1,
wherein an area of the air floating video at an imaging position is made larger than a video display area of the video source by a lens function of the optical element

3. The air floating video display apparatus according to claim 1,
wherein a structure capable of changing an optical distance between the video source and the retroreflection optical member is provided, and
a position and a size of the air floating video to be formed are changed by the structure to change the optical distance.

4. The air floating video display apparatus according to claim 1,
wherein at least one or more reflection mirror(s) as a reflection mirror reflecting video luminous flux is arranged in an optical path connecting the imaging position of the air floating video and the polarization splitter, and
a reflection mirror that is the closest to the imaging position of the air floating video in the optical path among the reflection mirrors is made of a metal multilayer film reflecting one polarization wave of the video light but transmitting the other polarization wave.

5. The air floating video display apparatus according to claim 1,
wherein the polarization splitter is made of a reflection-type light polarizer or a metal multilayer film reflecting a specific polarization wave.

6. The air floating video display apparatus according to claim 1,
wherein a video-light entering surface of a transparent member of the opening portion is provided with an anti-reflection film or an absorbing-type light polarizer.

7. An air floating video display apparatus forming an air floating video comprising:
an opening portion transmitting video light of a specific polarization wave forming the air floating video therethrough;
a transparent member arranged in the opening portion and transmitting the video light;
a liquid crystal display panel serving as a video source;
a light source supplying light of a specific polarization directionality to the video source;
a retroreflection optical member having a retroreflection surface provided with a waveplate;
a polarization splitter arranged in a space connecting the video source and the retroreflection optical member, and
an optical element arranged at a position near the opening portion as a position through which video luminous flux emitted for each pixel of the video source is transmitted,
wherein video light of one specific polarization wave emitted from the video source is transmitted through the polarization splitter,
the video light having been transmitted through the polarization splitter is caused to enter the retroreflection optical member and the waveplate to be converted in terms of light polarization,
the light-polarized video light of the other polarization wave is reflected toward the opening portion by the polarization splitter,
the air floating video that is an actual image is displayed outside the transparent member of the opening portion, based on the video light having been reflected by the polarization splitter,
a light entering surface of the retroreflection optical member is provided with a video-light control film in which a light transmitting member and a light absorbing member are alternately arranged along the light entering surface, and
scattered light of the video light due to surface roughness of the retroreflection optical member or external light entering the retroreflection optical member among external light entering the air floating video display apparatus through the opening portion is absorbed by the light absorbing member.

8. The air floating video display apparatus according to claim 7,
wherein a pitch "Ps" between the light transmitting member and the light absorbing member of the video-light control film is equal to or smaller than ten times a pitch between pixels of the video source, and
the pitch with respect to a thickness "T" of the video-light control film has a relation of "0.5 < Ps/T < 2.0".

9. An air floating video display apparatus forming an air floating video comprising:
an opening portion transmitting video light of a specific polarization wave forming the air floating video therethrough;
a transparent member arranged in the opening portion and transmitting the video light;
a liquid crystal display panel serving as a video source;
a light source supplying light of a specific polarization directionality to the video source;
a retroreflection optical member having a retroreflection surface provided with a waveplate; and
a polarization splitter arranged in a space connecting the video source and the retroreflection optical member,
wherein video light of one specific polarization wave emitted from the video source is transmitted through the polarization splitter,
the video light having been transmitted through the polarization splitter is caused to enter the retroreflection optical member and the waveplate to be converted in terms of light polarization,
the light-polarized video light of the other polarization wave is reflected toward the opening portion by the polarization splitter,
the air floating video that is an actual image is displayed outside the transparent member of the opening portion, based on the video light having been reflected by the polarization splitter,
the liquid crystal display panel emits the video light of the specific polarization wave from a display surface so as to emit the video light of the specific polarization wave from the other region of the display surface in a state in which the display surface is divided into a plurality of regions by arranging a λ/2 plate onto one region of the display surface and so as to emit video light of polarization wave different from the specific polarization wave from the one region through the λ/2 plate,
the retroreflection optical member including the waveplate is arranged for each region corresponding to the plurality of regions of the video source,
the polarization splitter is arranged in a space connecting the region and the retroreflection optical member,
the video light of the one polarization wave emitted from a first region of the video source is converted in terms of light polarization by a first retroreflection optical member and a first waveplate after being reflected by a first polarization splitter and being transmitted through a second polarization splitter while the light-polarized video light of the other polarization wave is reflected by the second polarization splitter so that a first air floating video is formed,
the video light of the other polarization wave emitted from a second region of the video source is converted in terms of light polarization by a second retroreflection optical member and a second waveplate after being reflected by the second polarization splitter and being transmitted through the first polarization splitter while the light-polarized video light of the one polarization wave is reflected by the first polarization splitter so that a second air floating video is formed, and
the air floating video is displayed outside the transparent member of the opening portion by composing the first air floating video and the second air floating video corresponding to the plurality of regions of the video source.

10. The air floating video display apparatus according to claim 9,
wherein the video source is arranged at a position at which a user cannot visually recognize the video light emitted from the video source when visually recognizing the opening portion in a visual recognition direction of the air floating video.

11. The air floating video display apparatus according to claim 1,
wherein a video displayed on the liquid crystal display panel is a video resulted from correction of image distortion generated in an optical system forming the air floating video.

12. The air floating video display apparatus according to claim 1,
wherein surface roughness of a retroreflection surface of the retroreflection optical member is set so that a ratio between a blur amount of the air floating video and a pixel size of the video source is equal to or lower than 40%,
the light source includes: a point-type or surface-type light source; an optical member reducing a divergence angle of light emitted from the light source; a polarization converter unifying the light emitted from the light source to be polarization light of specific directionality; and a light guiding body having a reflection surface propagating the light emitted from the light source to the video source,
the video light is controlled by a shape and a surface roughness of the reflection surface of the light source, and
video luminous flux having a narrow divergence angle emitted from the video source is reflected by the retroreflection optical member so that the air floating video is aerially formed.

13. The air floating video display apparatus according to claim 12,
wherein, in the light source, a part or all of a divergence angle of luminous flux is controlled by the shape and the surface roughness of the reflection surface so that a light beam divergence angle of the liquid crystal display panel is within ± 30 degrees.

14. The air floating video display apparatus according to claim 13,
wherein, in the light source, a part or all of a divergence angle of luminous flux is controlled by the shape and the surface roughness of the reflection surface so that the light beam divergence angle of the liquid crystal display panel is within ± 15 degrees.

15. The air floating video display apparatus according to claim 13,
wherein, in the light source, a part or all of a divergence angle of luminous flux is controlled by the shape and the surface roughness of the reflection surface so that a horizontal divergence angle and a vertical divergence angle of the light beam divergence angle of the liquid crystal display panel are different from each other.

16. A light source used in the air floating video display apparatus according to claim 1,
wherein a divergence angle is within ± 30 degrees.

17. The light source according to claim 16,
wherein the divergence angle is within ± 10 degrees.

18. The light source according to claim 16,
wherein a horizontal divergence angle and a vertical divergence angle are different from each other.

19. An air floating video display apparatus forming a three-dimensional air floating video comprising:
an opening portion transmitting video light of a specific polarization wave forming the three-dimensional air floating video therethrough;
a liquid crystal display panel serving as a video source;
a light source supplying light of a specific polarization directionality to the video source;
a retroreflection optical member having a retroreflection surface provided with a waveplate; and
a polarization splitter arranged in a space connecting an imaging position of the air floating video and the retroreflection optical member,
wherein video light of one specific polarization wave emitted from the video source is transmitted through or reflected by the polarization splitter,
the video light having been transmitted through or reflected by the polarization splitter is converted in terms of light polarization by the retroreflection optical member,
the light-polarized video light of the other polarization wave is reflected by or transmitted through the polarization splitter, and
the three-dimensional air floating video that is an actual image is displayed outside the opening portion, based on the video light having been reflected by or transmitted through the polarization splitter.

20. The air floating video display apparatus according to claim 19 further comprising
an optical element arranged at a position through which video luminous flux emitted for each pixel of the video source is transmitted,
wherein center of the optical element is eccentric from an optical axis connecting center of a video display region of the video source and center of an outer shape of the retroreflection optical member, and
center of the three-dimensional air floating video in a height direction is on an extension line of the eccentric center of the optical element

21. The air floating video display apparatus according to claim 19 further comprising
an optical element arranged at a position through which video luminous flux emitted for each pixel of the video source is transmitted,
wherein an area of the three-dimensional air floating video at an imaging position is made larger than a video display area of the video source by a lens function of the optical element

22. The air floating video display apparatus according to claim 19,
wherein a structure capable of changing an optical distance between the video source and the retroreflection optical member is provided, and
a position and a size of the three-dimensional air floating video to be formed are changed by the structure to change the optical distance.

23. The air floating video display apparatus according to claim 19,
wherein at least one or more reflection mirror(s) as a reflection mirror reflecting video luminous flux is arranged in an optical path connecting the imaging position of the three-dimensional air floating video and the polarization splitter,
a reflection mirror that is the closest to the imaging position of the three-dimensional air floating video in the optical path among the reflection mirrors is made of a metal multilayer film reflecting one polarization wave of the video light but transmitting the other polarization wave.

24. The air floating video display apparatus according to claim 19,
wherein the polarization splitter is made of a reflection-type light polarizer or a metal multilayer film reflecting a specific polarization wave.

25. The air floating video display apparatus according to claim 19,
wherein a video-light entering surface of a transparent member of the opening portion is provided with an anti-reflection film or an absorbing-type light polarizer.

26. An air floating video display apparatus forming a three-dimensional air floating video comprising:
a liquid crystal display panel serving as a video source;
a light source supplying light to the video source;
an opening portion transmitting video luminous flux emitted from each pixel of a display video of the video source therethrough;
a retroreflection optical member having a retroreflection surface provided with a waveplate; and
an optical element arranged at a position near the opening portion,
wherein the video luminous flux emitted from each pixel of the display video of the video source is reflected by the retroreflection optical member,
the video luminous flux having been reflected by the retroreflection optical member is transmitted through the optical element to form the three-dimensional air floating video that is an actual image to be displayed outside the opening portion,
an imaging position of the three-dimensional air floating video corresponds to a virtual plane having an area resulted from enlarging of a lens surface of the optical element substantially in parallel to the lens surface,
the optical element has a function of controlling an emission direction of the video luminous flux transmitted through the lens surface in accordance with tilt of the lens surface, and
the three-dimensional air floating video is formed by adding coordinate information of the three-dimensional air floating video in a height direction determined by a distance between the video source and the retroreflection optical element to planar coordinate information in the virtual plane corresponding to a region of the optical element through which the video luminous flux is transmitted so that a thickness of the optical element in the region is set

27. The air floating video display apparatus according to claim 26,
wherein the optical element is arranged so that center of the optical element is eccentric from an optical axis connecting center of a video display region of the video source and center of an outer shape of the retroreflection optical member, and
center of the three-dimensional air floating video in a height direction is on an extension line of the eccentric center of the optical element

28. The air floating video display apparatus according to claim 26,
wherein a light entering surface of the retroreflection optical member is provided with a video-light control film in which a light transmitting member and a light absorbing member are alternately arranged along the light entering surface, and
a pitch "Ps" between the light transmitting member and the light absorbing member of the video-light control film is equal to or smaller than ten times a pitch between pixels of the video source, and
the pitch with respect to a thickness"T" of the video-light control film has a relation of "0.5 < Ps/T < 2.0".

29. An air floating video display apparatus forming a three-dimensional air floating video comprising:
an opening portion transmitting video light of a specific polarization wave forming the three-dimensional air floating video therethrough;
a transparent member arranged in the opening portion and transmitting the video light;
a liquid crystal display panel serving as a video source for a planar video;
a light source supplying light of a specific polarization directionality to the video source;
a retroreflection optical member having a retroreflection surface provided with a waveplate;
a polarization splitter arranged in a space connecting the video source and the retroreflection optical member, and
an optical element arranged at a position near the opening portion as a position through which video luminous flux emitted for each pixel of the video source is transmitted,
wherein video light of one specific polarization wave emitted from the video source is transmitted through the polarization splitter,
the video light having been transmitted through the polarization splitter is caused to enter the retroreflection optical member and the waveplate to be converted in terms of light polarization,
the light-polarized video light of the other polarization wave is reflected toward the opening portion by the polarization splitter,
video luminous flux emitted from each pixel of the display video of the video source is transmitted through the optical element to form the three-dimensional air floating video that is an actual image to be displayed outside the opening portion, based on the video light having been reflected by the polarization splitter,
an imaging position of the three-dimensional air floating video corresponds to a virtual plane having an area resulted from enlarging of a lens surface of the optical element substantially in parallel to the lens surface,
the three-dimensional air floating video is formed by adding coordinate information of the three-dimensional air floating video in a height direction determined by a distance between the video source and the retroreflection optical element to planar coordinate information in the virtual plane corresponding to a region of the optical element through which the video luminous flux is transmitted so that a thickness of the optical element in the region is set,
the liquid crystal display panel emits the video light of the specific polarization wave from a display surface so as to emit the video light of the specific polarization wave from the other region of the display surface in a state in which the display surface is divided into a plurality of regions by arranging a λ/2 plate onto one region of the display surface and so as to emit video light of a polarization wave different from the specific polarization wave from the one region through the λ/2 plate,
the retroreflection optical member including the waveplate is arranged for each region corresponding to the plurality of regions of the video source,
the polarization splitter is arranged in a space connecting the region and the retroreflection optical member,
the video light of the one polarization wave emitted from a first region of the video source is converted in terms of light polarization by a first retroreflection optical member and a first waveplate after being reflected by a first polarization splitter and being transmitted through a second polarization splitter while the light-polarized video light of the other polarization wave is reflected by the second polarization splitter so that a first air floating video is formed,
the video light of the other polarization wave emitted from a second region of the video source is converted in terms of light polarization by a second retroreflection optical member and a second waveplate after being reflected by the second polarization splitter and being transmitted through the first polarization splitter while the light-polarized video light of the one polarization wave is reflected by the first polarization splitter so that a second air floating video is formed, and
the three-dimensional air floating video is displayed outside the transparent member of the opening portion by composing the first air floating video and the second air floating video corresponding to the plurality of regions of the video source.

30. The air floating video display apparatus according to claim 29,
wherein the optical element is arranged so that center of the optical element is eccentric from an optical axis connecting center of a video display region of the video source and center of an outer shape of the retroreflection optical member, and
center of the three-dimensional air floating video in a height direction is on an extension line of the eccentric center of the optical element

31. The air floating video display apparatus according to claim 29,
wherein the video source is arranged at a position at which a user cannot visually recognize the video light emitted from the video source when visually recognizing the opening portion in a visual recognition direction of the air floating video.

32. The air floating video display apparatus according to claim 19,
wherein a video displayed on the liquid crystal display panel is a video resulted from correction of image distortion generated in an optical system forming the three-dimensional air floating video.

33. The air floating video display apparatus according to claim 19,
wherein a surface roughness of a reflection surface of the retroreflection optical member is set so that a ratio between a blur amount of the three-dimensional air floating video and a pixel size of the video source is equal to or lower than 40%,
the light source includes: a point-type or surface-type light source; an optical member reducing a divergence angle of light emitted from the light source; a polarization converter unifying the light emitted from the light source to be polarization light of specific directionality; and a light guiding body having a reflection surface propagating the light to the video source,
the video light is controlled by a shape and a surface roughness of the reflection surface of the light source, and
video luminous flux having a narrow divergence angle emitted from the video source is reflected by the retroreflection optical member so that the three-dimensional air floating video is aerially formed.

34. The air floating video display apparatus according to claim 19,
wherein, in the light source, a part or all of a divergence angle of luminous flux is controlled by the shape and the surface roughness of the reflection surface of the light source so that a light beam divergence angle of the liquid crystal display panel is within ± 30 degrees.

35. The air floating video display apparatus according to claim 29,
wherein, in the light source, a part or all of a divergence angle of luminous flux is controlled by the shape and the surface roughness of the reflection surface of the light source so that a light beam divergence angle of the liquid crystal display panel is within ± 15 degrees.

36. The air floating video display apparatus according to claim 29,
wherein, in the light source, a part or all of a divergence angle of luminous flux is controlled by the shape and the surface roughness of the reflection surface of the light source so that a horizontal divergence angle and a vertical divergence angle of the light beam divergence angle of the liquid crystal display panel are different from each other.

37. A light source used in the air floating video display apparatus according to claim 29,
wherein a divergence angle is within ± 30 degrees.

38. The light source according to claim 37,
wherein a divergence angle is within ± 10 degrees.

39. The light source according to claim 37,
wherein a horizontal divergence angle and a vertical divergence angle are different from each other.

40. An air floating video display apparatus forming a three-dimensional air floating video comprising:
an opening portion transmitting video light of a specific polarization wave forming the three-dimensional air floating video therethrough;
a liquid crystal display panel serving as a video source;
a light source supplying light of a specific polarization directionality to the video source;
a retroreflection optical member having a retroreflection surface provided with a waveplate;
a polarization splitter arranged in a space connecting an imaging position of the air floating video and the retroreflection optical member, and
an optical element arranged at a position near the opening portion as a position through which video luminous flux emitted for each pixel of the video source is transmitted,
wherein an imaging position of the three-dimensional air floating video corresponds to a virtual plane having an area resulted from enlarging of a lens surface of the optical element substantially in parallel to the lens surface,
the optical element has a function of controlling an emission direction of the video luminous flux transmitted through the lens surface in accordance with tilt of the lens surface,
the three-dimensional air floating video is formed at the imaging position determined by adding coordinate information of the three-dimensional air floating video in a height direction determined by a distance between the video source and the retroreflection optical element to planar coordinate information in the virtual plane corresponding to a region of the optical element through which the video luminous flux is transmitted,
video light of one specific polarization wave emitted from the video source is transmitted through the polarization splitter,
the video light having been transmitted through the polarization splitter is converted in terms of light polarization by the retroreflection optical member and the waveplate, and
the three-dimensional air floating video that is an actual image is displayed outside the transparent member of the opening portion, based on the light-polarized video light of the other polarization wave.

41. The air floating video display apparatus according to claim 40,
Wherein the optical element is arranged so that center of the optical element is eccentric from an optical axis connecting center of a video display region of the video source and center of an outer shape of the retroreflection optical member, and
center of the air floating video in a height direction is on an extension line of the eccentric center of the optical element

42. An air floating video display apparatus forming a three-dimensional air floating video comprising:
an opening portion transmitting video light forming the three-dimensional air floating video therethrough;
A transparent member arranged in the opening portion and transmitting the video light therethrough;
a retroreflection optical member, and
a video-light control film which is arranged on a light entering surface of the retroreflection optical member and in which a light transmitting member and a light absorbing member are alternately arranged along the light entering surface,
wherein the video light emitted from the video source is caused to enter the retroreflection optical member, and is reflected toward the opening portion by the retroreflection optical member so that the three-dimensional air floating video that is an actual image is displayed outside the transparent member, and
scattered light of the video light due to surface roughness of the retroreflection optical member or external light entering the retroreflection optical member among external light entering the air floating video display apparatus through the opening portion is absorbed by the light absorbing member.
